(19) Europäisches Patentamt / European Patent Office / Office européen des brevets

(11) **EP 4 088 490 B1**

(12) **EUROPÄISCHE PATENTSCHRIFT**

(45) Veröffentlichungstag und Bekanntmachung des Hinweises auf die Patenterteilung:
**03.07.2024   Patentblatt 2024/27**

(21) Anmeldenummer: **20848950.0**

(22) Anmeldetag: **27.11.2020**

(51) Internationale Patentklassifikation (IPC):
*H04W 4/021* (2018.01)   *H04W 72/02* (2009.01)

(52) Gemeinsame Patentklassifikation (CPC):
**H04W 4/021; H04W 72/02;** H04W 4/40;
H04W 72/51

(86) Internationale Anmeldenummer:
**PCT/CZ2020/000051**

(87) Internationale Veröffentlichungsnummer:
**WO 2021/110184 (10.06.2021 Gazette 2021/23)**

(54) **VERFAHREN ZUR AUSWAHL NUTZBARERER KANÄLE DER DRAHTLOSEN NACHRICHTENÜBERTRAGUNG DES FAHRZEUGKOMMUNIKATIONSMODULS**

METHOD SELECTING THE USEABLE CHANNELS FOR WIRELESS MESSAGE TRANSMISSION OF THE VEHICLE COMMUNICATION MODEL

PROCÉDÉ DE SÉLECTION DES CANAUX UTILISABLES POUR LA TRANSMISSION DE MESSAGES SANS FIL DU MODÈLE DE COMMUNICATION DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2019   CZ 20190734**

(43) Veröffentlichungstag der Anmeldung:
**16.11.2022   Patentblatt 2022/46**

(73) Patentinhaber: **Skoda Auto A.S.**
**293 01 Mladá Boleslav II (CZ)**

(72) Erfinder:
• **MLACKI, Patrik**
**29446 Semcice (CZ)**
• **VÁVRA, Petr**
**19000 Praha 9 (CZ)**

(56) Entgegenhaltungen:
**US-A1- 2015 334 646**

EP 4 088 490 B1

**Beschreibung**

Bereich der Technik

Die Erfindung betrifft eine drahtlose Kommunikation, konkret das Verfahren zur Einstellung einer drahtlosen Kommunikation, realisiert mittels Kommunikationsmodul eines Fahrzeugs, wobei für die Einstellung eine Position des Fahrzeugs genutzt wird.

Derzeitiger Stand der Technik

Bei drahtlosen Kommunikationsvorrichtungen, konkret zum Beispiel bei Vorrichtungen, die mit WiFi-Technologie arbeiten, gelten in manchen Staaten und Gebietseinheiten Einschränkungen der Nutzung dieser Vorrichtungen. Eine typische Einschränkung ist zum Beispiel die Beschränkung der WiFi-Bänder, d.h. Beschränkungen der Frequenzkanäle, auf denen drahtlose Kommunikationsvorrichtungen das Signal senden oder empfangen können. Beim Übertritt der Grenze solcher Staaten oder bei einer Annäherung zur Grenze ist es dann zweckmäßig, die drahtlose Kommunikationsvorrichtung so umzustellen, dass die Regeln des gegebenen Staates nicht verletzt werden.

Bei derzeitigem Stand der Technik sind WiFi-Router bekannt, welche für den Empfang der Informationen über die Position und Einstellung der verwendeten Bänder angepasst sind, entsprechend den Einschränkungen, welche im Staat gelten, in dem sich der Router gerade befindet.

Zum Beispiel im Dokument CN107517478A ist ein Router beschrieben, welcher ein Positionierungsmodul und Modul zur Auffindung der festgestellten Position im Speicher und Zuordnung der entsprechenden Einstellung der WiFi-Parameter in Abhängigkeit von den gespeicherten Informationen enthält. In diesem Dokument wird jedoch eine nähere Beschreibung des Algorithmus nicht veröffentlicht, es enthält auch keine nähere Beschreibung des Algorithmus zur Einstellung des Routers und es wird hier auch keine Möglichkeit beschrieben, wie man eine solche Einstellung in einer Vorrichtung mit einem relativ kleinen Speicher oder mittels einer im Auto eingebauten Vorrichtung durchführen kann.

Im Dokument US20140226572 A1 wird die Methode und die Vorrichtung für die Wahl des WiFi-Kanals beschrieben, zum Beispiel in Abhängigkeit von Standortinformationen, die von GPS geliefert werden. Für die Zuordnung der geeigneten Kanäle zur festgestellten Position werden hier Staatencodes genutzt, es ist also notwendig, in den Speicher der verwendeten Vorrichtung detaillierte Daten einzuspielen, anhand welcher man feststellen kann, zu welchem Staat konkrete Koordinaten gehören. Aus diesem Grund ist es notwendig, dass die eingesetzte Vorrichtung einen relativ großen Speicher enthält. Für die Verwendung in einem normalen Auto könnte es deswegen notwendig sein, den Wagen mit einem zusätzlichen Speicher auszustatten. Die Speicherung ähnlicher, bzw. ähnlich umfangreicher Informationen in die Datenbank ist auch nach der Lösung, welche in der japanischen Patentschrift JP2004274723A veröffentlicht wurde, erforderlich. Die in diesem Dokument beschriebene Lösung verwendet für Zuordnung der geeigneten Einstellung der drahtlosen Kommunikation zu der bestimmten Position die gespeicherten Bereichsinformationen.

Dokument WO2015154461 A1 beschreibt die Methode der Einstellung der WiFi-Vorrichtung in Abhängigkeit von der Position. Die Parameter für die WiFi-Vorrichtung werden dabei nach dem Code des Staates bestimmt, in dem sich die Vorrichtung befindet. Es ist also notwendig, dass die beschriebene Methode die Zuordnung der geographischen Koordinaten zu konkretem Staat beinhaltet, was bei derzeitigem Stand der Technik den Zugang zu Kartenunterlagen erfordert, welche hohe Speichervolumen brauchen, und Zugang zum Algorithmus, welcher aufgrund dieser Kartenunterlagen den Staat bestimmt, welcher die Position enthält. Die beschriebene Methode kann aus diesem Grund von einer Vorrichtung mit zu kleinem erreichbaren Speichervolumen nicht genutzt werden.

Dokument US 2015/334 646 A1 beschreibt ein Verfahren zum Beschleunigen der Netzwerkauswahl durch ein drahtloses Benutzergerät, wobei ein Netzwerk durch Scannen ermittelt wird und ein Decodieren der Identitätsinformationen des ermittelten Netzwerks erfolgt. Abhängig von decodierten Identitätsinformationen erfolgt die Bestimmung einer Teilmenge geeigneter Frequenzdaten zum selektiven Scannen durch das Benutzergerät sowie das Lokalisieren eines Netzwerks durch selektives Scannen unter Verwendung der Teilmenge geeigneter Frequenzdaten.

Keiner der erwähnten Patentdokumente bietet eine Lösung des Problems der hohen Ansprüche der genutzten Methoden und Algorithmen auf die Speicherkapazität an.

Die in die Automobile eingebauten Vorrichtungen haben üblicherweise einen relativ kleinen freien Datenspeicher, der für die Einstellung der Parameter der drahtlosen Kommunikation genutzt werden kann. Es wäre deshalb zweckmäßig, eine Lösung zu bringen, welche die algorithmische Einstellung der drahtlosen Kommunikation in Abhängigkeit von der Position ermöglichen würde und dazu eine relativ kleine Speicherkapazität bräuchte. Eine solche Lösung sollte also nicht für ihre normale Tätigkeit detaillierte Kartenunterlagen mit Grenzen einzelner Staaten erfordern, und auch keine Kommunikation mit einem entfernten Speicherort.

Grundlage der Erfindung

Die Erfindung betrifft ein Verfahren zur Auswahl nutzbarer Kanäle einer drahtlosen Kommunikation eines Kommunikationsmoduls eines Fahrzeugs nach Anspruch 1 sowie ein Fahrzeug nach Anspruch 9. Zweckmäßige Ausgestaltungen der Erfindung sind in den abhängigen Ansprüchen sowie den nachstehenden Ausführungen beschrieben.

Oben erwähnte Mängel werden bis zu einem gewissen Grad durch die Art der Auswahl nutzbarer Kanäle einer drahtlosen Kommunikation eines Kommunikationsmoduls eines Fahrzeugs nach der hier vorgelegten Erfindung beseitigt. Die Auswahl findet unter einer Anwendung eines Positionierungsmoduls und mindestens einer von Steuereinheiten statt, welche gespeicherte Daten in Abhängigkeit von einer geographischen Position des Fahrzeugs beinhaltet, wobei die Auswahl der nutzbaren Kanäle der drahtlosen Kommunikation entsprechend einem vom Kommunikationsmodul des Fahrzeugs unterstützten Verzeichnis der Kanäle der drahtlosen Kommunikation erfolgt. Im Speicher befindet sich eine Datenbank geographischer Bereiche und geographischer Koordinaten, welche den geographischen Bereichen angehören, wobei jeder geographische Bereich durch entsprechende geographische Koordinaten abgegrenzt ist und für jeden geographischen Bereich im Speicher mindestens eine Menge verbotener Kanäle der drahtlosen Kommunikation im gegebenen geographischen Bereich gespeichert ist. Die oben genannte Methode der Auswahl der nutzbaren Kanäle der drahtlosen Kommunikation beinhaltet folgende Schritte:

- Bestimmung der geographischen Position des Fahrzeugs mittels Positionierungsmodul;

- Aussuchen der geographischen Bereiche, welche die bestimmte Position enthalten, in der Datenbank mittels Steuereinheit; und

- Auswahl der nutzbaren Kanäle der drahtlosen Kommunikation.

Im Prozess der Auswahl der nutzbaren Kanäle der drahtlosen Kommunikation werden aus dem Verzeichnis der Kanäle der drahtlosen Kommunikation nutzbare Kanäle der drahtlosen Kommunikation in Abhängigkeit von mindestens einer aus den Mengen der verbotenen Kanäle der drahtlosen Kommunikation ausgewählt, welche für den geographischen Bereich, welcher die bestimmte Position enthält, bestimmt sind. Diese mindestens eine aus der Menge der verbotenen Kanäle der drahtlosen Kommunikation, welche für den geographischen Bereich, welcher die bestimmte geographische Position enthält, definiert ist, beinhaltet keinen aus den ausgewählten nutzbaren Kanälen der drahtlosen Kommunikation. Also, mindestens eine der Mengen der verbotenen Kanäle der drahtlosen Kommunikation, welche für den geographischen Bereich, der die bestimmte geographische Position enthält, bestimmt ist, hat eine leere Schnittmenge mit der Menge aller ausgewählten nutzbaren Kanäle der drahtlosen Kommunikation.

Anders gesagt, im Schritt der Wahl der nutzbaren Kanäle der drahtlosen Kommunikation können die nutzbaren Kanäle der drahtlosen Kommunikation ausgewählt werden, welche durch keine Menge der verbotenen Kanäle verboten sind, die für den gefundenen geographischen Bereich bestimmt sind, oder zumindest die, welche nicht von allen Mengen, aber nur von einigen Mengen der verbotenen Kanäle der drahtlosen Kommunikation verboten sind. In diesem Schritt wird also das Verzeichnis der Kanäle genommen, Kanäle, welche zum Beispiel nur in einer Menge oder nur in einigen Mengen oder in einer beliebigen Menge oder in allen Mengen von den Mengen der verbotenen Kanäle enthalten sind, und die für den gefundenen geographischen Bereich bestimmt sind, die die vorgegebene Position enthalten, werden aussortiert, und danach werden nutzbare Kanäle ausgewählt, zum Beispiel alle, welche im Verzeichnis der Kanäle nach diesem Aussortieren der verbotenen Kanäle übrig bleiben, oder nur einige von ihnen, oder vielleicht nur einer von ihnen.

Am Ausgang der Auswahl der nutzbaren Kanäle der drahtlosen Kommunikation wird also eindeutig eine Menge der Kanäle bestimmt (die auch leer sein kann), an welchen die gegebene drahtlose Kommunikation betrieben werden kann, d.h. an welchen es möglich ist, das Signal zu senden oder zu empfangen.

Das Verfahren nach dieser Erfindung kann mittels einer einzigen Steuereinheit realisiert werden, aber es kann auch mit mehreren unterschiedlichen Steuereinheiten arbeiten, welche eine einzige Speichervorrichtung gemeinsam nutzen können, oder es kann jede Steuereinheit einen eigenen Speicher haben. Zum Beispiel kann der erste Schritt oder die ersten zwei Schritte von einer Steuereinheit mit dem Speicher, welcher die Datenbank der geographischen Bereiche enthält, ausgeführt, und verbleibende Schritte können durch eine andere Steuereinheit mit einem anderen Speicher realisiert werden.

Das Verzeichnis der Kanäle der drahtlosen Kommunikation enthält die Menge aller Kanäle, an welchen die gedachte drahtlose Kommunikation betrieben werden kann, also aller Kanäle, die von dem vorgesehenen Kommunikationsmodul unterstützt werden. Das Verzeichnis der Kanäle kann durch Aufzählen einzelner Kanäle, Liste der einzelnen Kanäle, Liste der Bänder (Frequenzintervalle) und ähnlich bestimmt werden.

Ein geographischer Bereich kann ein bestimmter Teil der Weltkarte sein, der mindestens teilweise irgendeine Gebietseinheit abdeckt, wie z.B. einen Staat, den Teil eines Staates, eine Gruppierung mehrerer Staaten u.Ä. Ein geographischer Bereich ist durch geographische Koordinaten definiert. Er kann also mittels Menge oder Intervall der Koordinaten, einiger Koordinaten, zwischen welchen sich der gegebene geographische Bereich befindet, einer Koordinate und konkret festgelegter Größe, Gestaltung der Grenze usw. bestimmt werden. Zur Bestimmung der Position dient das Positionierungsmodul, welches vorzugsweise GPS oder ein anderes Positionierungssystem nutzt.

Unter einer Menge der verbotenen Kanäle der drahtlosen Kommunikation wird die Menge (das Verzeichnis) der Kanäle verstanden, welche innerhalb dieses Gebiets, zum Beispiel auf dem Territorium eines bestimmten Staates, innerhalb des Gebiets, welches dem gegebenen geographischen Bereich entspricht, usw. nicht verwendet werden sollen. Diese Menge kann durch die Aufzählung der Kanäle, Frequenzintervall (Frequenzband oder seine Teile) u.Ä. bestimmt werden. Bestimmung der Menge der verbotenen Kanäle für konkrete geographische Bereiche kann direkt durch Einspeicherung der gegebenen Menge in die Datenbank zusammen mit dem Datensatz des gegebenen geographischen Bereichs durchgeführt werden. Es ist vorteilhaft, die Bestimmung der Menge der verbotenen Kanäle mittels eines alphanumerischen Codes durchzuführen, welcher jedem geographischen Bereich oder einer Gruppe der geographischen Bereiche zugeordnet wird, wobei diesem Code in weiterem Teil der Datenbank oder in einer anderen Datenbank eine entsprechende Menge der verbotenen Kanäle der drahtlosen Kommunikation zugeteilt wird. Die Menge der verbotenen Kanäle der drahtlosen Kommunikation kann mittels einer Ergänzung im Verzeichnis der nutzbaren Kanäle der drahtlosen Kommunikation bestimmt werden, d.h. als ein Verzeichnis der erlaubten (nicht verbotenen) Kanäle der drahtlosen Kommunikation. Auch die Bestimmung der Menge der nutzbaren Kanäle kann ähnlich realisiert werden.

Im Schritt der Auswahl der nutzbaren Kanäle der drahtlosen Kommunikation muss zur Auswahl kein Kanal verfügbar sein, zum Beispiel dann, wenn in gegebenem geographischen Bereich alle Kanäle der drahtlosen Kommunikation aus dem Verzeichnis der Kanäle verboten sind. In diesem Fall wird also kein Kanal der drahtlosen Kommunikation ausgewählt und drahtlose Kommunikation kann dann auf keinem Kanal laufen. Anders gesagt, als Folge des Auswahlverfahrens nach der Erfindung kann die drahtlose Kommunikation ausgeschaltet werden.

Nach der Auswahl der nutzbaren Kanäle der drahtlosen Kommunikation kann die Einstellung der drahtlosen Kommunikation erfolgen, bei der sichergestellt wird, dass die vorgesehene drahtlose Kommunikation nur über manche oder über alle nutzbaren Kanäle verläuft, eventuell dass drahtlose Kommunikation nicht läuft, wenn kein Kanal verwendbar ist. Für die Kommunikation wird also nachfolgend elektromagnetische Strahlung mit Frequenzen genutzt, welche durch nutzbare Kanäle bestimmt wird.

Bei der Suche in der Datenbank nach geographischen Bereichen, welche die bestimmte Position enthalten, können einzelne geographische Bereiche reihenweise getestet werden, wobei mittels dieser Tests für den gegebenen geographischen Bereich festgestellt wird, ob er die bestimmte Position enthält oder nicht. Das Verfahren der Auswahl der nutzbaren Kanäle kann dann beschleunigt werden, wenn zuerst die geographischen Bereiche durchsucht werden, bei welchen es die größte Wahrscheinlichkeit gibt, dass sie die gesuchte Position enthalten.

Geographische Bereiche werden auf Grenzbereiche und Innenbereiche aufgeteilt, wobei jeder Innenbereich in der Datenbank gerade einmal, und jeder Grenzbereich in der Datenbank mindestens einmal eingespeichert wird. Ein Grenzbereich ist also ein Gebiet, der die Grenze zwischen zwei Gebietseinheiten enthält. Der Grenzbereich kann dementsprechend zu mehreren Gebietseinheiten gehören. Falls die Datenbank wegen Vereinfachung des Suchprozesses unter Berücksichtigung der Gebietseinheiten aufgegliedert oder geordnet wird, welche innerhalb der geographischen Gebiete liegen, kann es vorteilhaft sein, wenn jeder Grenzbereich mehrmals in die Datenbank eingespeichert wird, zum Beispiel für jeden Staat, der sich mit dem gegebenen geographischen Bereich teilweise überdeckt, gesondert.

Bei der Auswahl der nutzbaren Kanäle der drahtlosen Kommunikation können Kanäle ausgewählt werden, welche einer der folgenden Menge angehören: Menge, welche die Kanäle aus dem 2,4-GHz-Frequenzband umfasst, Menge, welche die Kanäle aus dem 5-GHz-Frequenzband umfasst, Menge, welche die Kanäle aus den 2,4-GHz- und 5-GHz-Frequenzbändern umfasst, Menge, welche die Kanäle aus dem beschränkten 5-GHz-Frequenzband umfasst, und eine leere Menge. Auch andere oder weitere Frequenzbände können benutzt werden, zum Beispiel 60 GHz. Die Menge mit dem beschränkten 5-GHz-Frequenzband kann und muss nicht einige oder alle Kanäle aus dem 2,4-GHz-Frequenzband enthalten. Die erwähnten Frequenzbänder sind vorteilhaft, weil sie den meistens genutzten Standards für die WiFi-Kommunikation entsprechen, und weil in manchen Staaten gerade diese Frequenzbänder teilweise oder vollständig verboten oder beschränkt sind.

In der vorteilhaften Ausführung sind geographische Bereiche in der Datenbank durch Äquator und Null-Meridian in vier geographische Zonen aufgeteilt. Jede dieser Zonen ist eindeutig mittels Vorzeichen vor geographischen Koordinaten bestimmt. Bei der Suche in der Datenbank kann man also aus den Zeichen der Koordinaten die Zone feststellen und nachfolgend können diese Zeichen ausgelassen werden, weil sie für die Suche innerhalb der gegebenen Zone keine Rolle spielen. Falls einzelne geographische Bereiche in der Datenbank auch mit Hilfe der Koordinaten gespeichert sind, müssen die Zeichen nicht bei diesen Koordinaten eingetragen werden, weil sie schon durch ihre Zugehörigkeit zu einer der Zonen definiert sind. Dank dieser Tatsache kann in der Datenbank Speicherkapazität eingespart werden, weil den Koordinaten, welche geographische Koordinaten bestimmen, kein extra Bit für die Bestimmung des Zeichens zugeordnet werden muss.

In der besonders vorteilhaften Ausführung hat jeder Grenzbereich eine ungefähre Größe von 1° der geographischen Breite auf 1° der geographischen Länge, und jeder Innenbereich beinhaltet mindestens einen Bereich, der ungefähr die Größe von 1° der geographischen Breite auf 1° der geographischen Länge hat. Die Innenbereiche können als Verbindung von mehreren Bereichen mit der Größe 1° auf 1° entstehen, wodurch die Anzahl der geographischen Bereiche reduziert wird, und im Speicher kann also Platz eingespart werden. In Anbetracht der Tatsache, dass durch die Innenbereiche keine Grenze zwischen Gebietseinheiten verläuft, gilt für den ganzen Innenbereich eine einzige Menge der verbotenen Frequenzbänder der drahtlosen Kommunikation, oder eine einzige Einschränkung der drahtlosen Kommunikation, und es kommt zu keinem Verlust der Genauigkeit der Wahl der nutzbaren Kanäle. Der Vorteil der angegebenen Größe und Form der geographischen Bereiche besteht darin, dass für jeden Grenzbereich eindeutig ein Punkt mit ganzzahligen Koordinaten bestimmt ist, welcher in diesen Bereich fällt, so dass ein solcher Bereich eindeutig durch seine Größe, Form und Position eines konkreten Punktes, zum Beispiel einer Ecke des gegebenen Bereichs oder seiner Mitte, bestimmt ist. Zur Einspeicherung des gesamten Grenzbereichs müssen dann in die Datenbank nur beide Koordinaten des gegebenen Punktes eingespeichert werden.

Jeder geographische Bereich kann eindeutig durch einen oder durch zwei Punkte bestimmt werden, wobei jeder Punkt mittels geographischer Breite und geographischer Länge definiert ist. Wie weiter oben erwähnt, reicht bei Bereichen, bei welchen ihre Größe und/oder Form bekannt ist, ein Punkt für ihre eindeutige Bestimmung. Für die geographischen Bereiche, bei welchen aus der Datenbank ihre Größe bekannt ist, kann für die eindeutige Bestimmung des gegebenen Bereichs die Position von zwei verschiedenen Punkten ausreichend sein. Zum Beispiel bei quadratischen oder rechteckigen Bereichen ist es für eine eindeutige Bestimmung ausreichend, wenn man die Position von zwei gegenüberliegenden Ecken (d.h. Ecken, welche nicht an einer gemeinsamen Kante liegen) kennt. Bei quadratischen Bereichen können diese Ecken auch auf einer gemeinsamen Kante liegen.

Die Bestimmung von geographischen Bereichen mittels zwei Punkten ist vorteilhaft zum Beispiel für Innenbereiche, welche aus mehreren Quadraten 1° auf 1° bestehen, so dass sie den Bereich von der Größe $m°$ auf $n°$ bedecken, wobei $m$ und $n$ natürliche Zahlen sind. Dank der Tatsache, dass für das Abspeichern von jedem geographischen Bereich in die Datenbank ein oder zwei Punkte reichen, jeder mittels zwei Koordinaten definiert, kann man die gesamte Datenbank der geographischen Bereiche auch in einer Vorrichtung mit einem relativ kleinen Speicher abspeichern.

Die Bestimmung der Mengen der verbotenen Kanäle der drahtlosen Kommunikation für geographische Bereiche kann mittels Aufteilung der Datenbank in Sektionen, wobei jeder geographische Bereich mindestens einer Sektion zugeordnet ist, und Bestimmung der Menge der verbotenen Kanäle der drahtlosen Kommunikation für jede Sektion realisiert werden. Auf diese Weise ist die Information, welche die Menge der verbotenen Kanäle bestimmt, gemeinsam für mehrere geographische Bereiche in der Datenbank nur einmal gespeichert, und gegebene geographische Bereiche sind mit dieser Information durchgeschaltet. Diese Information kann zum Beispiel im Kopfbereich der Datenbank enthalten sein, welche die entsprechende Sektion beinhaltet. Dank der Tatsache, dass die Information, welche die Menge der verbotenen Kanäle bestimmt, in der Datenbank nicht für jeden geographischen Bereich einzeln abgespeichert wird, kann in der Datenbank Platz eingespart werden.

Jeder Grenzbereich ist vorteilhaft in Unterbereiche aufgegliedert, wobei jeder Unterbereich mit Informationen gekoppelt ist, welche für diesen Unterbereich die Gültigkeit einzelner Mengen der verbotenen Kanäle der drahtlosen Kommunikation festlegen, welche für den gegebenen Grenzbereich bestimmt sind. Bei der Auswahl der nutzbaren Kanäle der drahtlosen Kommunikation wird dann bei jedem gefundenen Grenzbereich der Unterbereich definiert, welcher die festgelegte Position beinhaltet, und der Zustand der drahtlosen Kommunikation wird nachfolgend auf der Grundlage der Vereinigung der Mengen der verbotenen Kanäle der drahtlosen Kommunikation, welche in den betreffenden Unterbereichen gültig sind, gewählt. Die Aufteilung der Grenzbereiche in Unterbereiche macht es möglich, die Genauigkeit der Auswahl der nutzbaren Kanäle in der Nähe der Grenze zwischen Gebietseinheiten zu verbessern. Die Erhöhung des erforderlichen Speicherumfangs ist dabei nicht so groß, wie in dem Fall, wenn man einfach die Größe aller geographischen Bereiche reduzieren würde. Aus diesem Grund ist die Kombination der Aufgliederung der geographischen Bereiche in Innen- und Grenzbereiche mit der Aufteilung nur auf Innen- und Grenzbereiche mit einer Aufteilung nur der Grenzbereiche auf Unterbereiche besonders vorteilhaft in dem Fall, wenn die Steuereinheit nur einen kleinen Speicherumfang zur Einspeicherung der Datenbank der geographischen Bereiche zur Verfügung hat.

Zum Beispiel kann ein Unterbereich, der völlig innerhalb einer Gebietseinheit liegt, mit einer Information verknüpft sein, welche für diesen Unterbereich bestimmt, dass in ihm nur eine einzige Menge der verbotenen Kanäle gilt, und zwar die Menge der verbotenen Kanäle, welche von der Legislative für einen gegebenen Gebietsbereich festgelegt wurde. Demgegenüber kann für die Unterbereiche, welche eine Grenze enthalten, also für Unterbereiche, bei welchen man zwei oder mehrere Mengen der verbotenen Kanäle in Betracht ziehen muss, weil das Verfahren nach der Erfindung es nicht möglich macht festzustellen, auf welcher Seite der Grenze sich die gesuchte Position befindet, eine Information zugeordnet werden, welche für diesen Unterbereich festlegt, dass in ihm zwei oder mehrere unterschiedliche Mengen der verbotenen Kanäle gelten. Während der Auswahl der nutzbaren Kanäle der drahtlosen Kommunikation können dann nutzbare Kanäle so ausgewählt werden, dass keine Konflikte mit der Legislative auf einer der Seiten der Grenze entstehen können. Zum Beispiel können alle Kanäle aus dem Verzeichnis der Kanäle als nutzbar gewählt werden, welche in keiner der Mengen der verbotenen Kanäle enthalten sind, die in dem betrachteten Unterbereich gelten.

Die Mengen der verbotenen Kanäle können in der Datenbank für einzelne geographische Bereiche über Codes der Staaten festgelegt werden. Im Verlauf der Auswahl der nutzbaren Kanäle der drahtlosen Kommunikation wird dann dem Staat-Code die Menge der verbotenen Kanäle der drahtlosen Kommunikation zugeordnet. In der Situation, wenn zwei Steuereinheiten zur Verfügung stehen, kann die erste Steuereinheit die Bestimmung der Position, zum Beispiel mittels Informationen von der GPS, und die Bestimmung der relevanten Unterbereiche realisieren. Die erste Steuereinheit versendet dann an die andere Steuereinheit den Code des gegebenen Staates. Die zweite Steuereinheit kann dann die Auffindung der entsprechenden Menge der verbotenen Kanäle in der Datenbank nach dem gegebenen Staatscode, Auswahl der nutzbaren Kanäle und eventuell auch Einstellung der drahtlosen Kommunikation in Abhängigkeit von ausgewählten nutzbaren Kanälen realisieren.

Die Nachteile der Lösungen, welche nach dem derzeitigen Stand der Technik bekannt sind, werden bis zu einem gewissen Grad von einem Fahrzeug beseitigt, welches Steuereinheit, Kommunikationsmodul und Modul zur Positionsbestimmung enthält. Das Kommunikationsmodul kann über die Steuereinheit für den Empfang und/oder die Übermittlung des Signals auf gewählten Kanälen der drahtlosen Kommunikation eingestellt werden, wobei zur Bestimmung der Position des Fahrzeugs Informationen genutzt werden, die das Modul zur Bestimmung der Position des Fahrzeugs liefert. Die Kanäle der drahtlosen Kommunikation werden dann auf dem Weg der Auswahl der nutzbaren Kanäle der drahtlosen Kommunikation des Kommunikationsmoduls des Fahrzeugs ausgewählt, welche oben beschrieben sind.

Das gesamte Verfahren kann durch die erwähnte Steuereinheit realisiert werden, oder es kann zum Teil auch durch eine weitere Steuereinheit bearbeitet werden, zum Beispiel in einer, die im Kommunikationsmodul eingebaut ist. So kann zum Beispiel auch das Kommunikationsmodul eingebunden werden, welches als Bestandteil der Firmware einen Algorithmus für die Wahl der nutzbaren Kanäle in Abhängigkeit von übermitteltem Code des Staates enthält. Bei einer Veränderung der Legislative in einem der Staaten ist es dann ausreichend, wenn die Firmware aktualisiert wird, was zum Beispiel vom Hersteller des Kommunikationsmoduls über Fernübertragung vorgenommen werden kann, und es ist nicht notwendig, die Software der anderen (ersten) Steuereinheit zu aktualisieren, welche kein Bestandteil des Kommunikationsmoduls ist. Gleichzeitig entfällt auch die Notwendigkeit, den Teil der Datenbank mit geographischen Codes zu aktualisieren, soweit er von dem Teil mit Staatencodes getrennt ist, welche mit konkreten Mengen der verbotenen Kanäle der drahtlosen Kommunikation verknüpft sind.

Erklärung der Zeichnungen

**Grundlage der Erfindung wird im Weiterem mittels der Beispiele ihrer Ausführung erklärt, welche unter Zuhilfenahme der angeschlossenen Zeichnungen beschrieben sind, wobei die:**

Fig. 1 zeigt eine schematisch abgebildete Karte des Staates, bzw. die Grenze dieses Staats, unterteilt in geographische Bereiche,

Fig. 2 zeigt das Detail eines Grenzbereichs von der Fig. 1 unterteilt in Unterbereiche,

Fig. 3 zeigt die Tabelle mit Informationen, welche die Gültigkeit der Menge der verbotenen Kanäle der drahtlosen Kommunikation bestimmen, welche für den Grenzbereich aus der Fig. 2 in der ersten Sektion gültig ist,

Fig. 4 zeigt die Tabelle mit Informationen, welche die Gültigkeit der Menge der verbotenen Kanäle der drahtlosen Kommunikation bestimmen, welche für den Grenzbereich aus der Fig. 2 in der zweiten Sektion gültig ist,

Fig. 5 zeigt das Entwicklungsdiagramm für die Erstellung der Datenbank der geographischen Bereiche nach dem ersten Beispiel der Ausführung der vorgelegten Erfindung,

Fig. 6 zeigt schematisch die Struktur der Datenbank, welche mittels dem Algorithmus nach dem Entwicklungsdiagramm aus der Fig. 5 erstellt wurde,

Fig. 7 zeigt das Entwicklungsdiagramm für die Gestaltung nach dem ersten Beispiel der Erfindungsausführung,

Fig. 8 zeigt das Entwicklungsdiagramm für die Erstellung der Datenbank der geographischen Bereiche nach dem zweiten Beispiel der Erfindungsausführung,

Fig. 9 zeigt das Entwicklungsdiagramm für die Gestaltung nach dem zweiten Beispiel der Erfindungsausführung,

Fig. 10 zeigt schematisch die Vorrichtung mit dem Kommunikationsmodul und mit der Steuereinheit für die der Erfindung entsprechenden Ausführung und

Fig. 11 zeigt die Tabelle mit binären Codes für jeden Zustand der drahtlosen Kommunikation nach dem ersten Beispiel der Erfindungsausführung.

Beispiele der Ausführung der Erfindung

Beschriebene Realisierungsbeispiele zeigen Varianten der Ausführung dieser Erfindung, die jedoch aus dem Sichtpunkt des Schutzes keinen beschränkenden Einfluss haben.

Der Gegenstand der vorliegenden Erfindung ist die Methode der Wahl der nutzbaren Kanäle der drahtlosen Kommunikation des Kommunikationsmoduls des Fahrzeugs. In dem ersten Beispiel der Ausführung ist das Kommunikationsmodul ein WiFi-Modul 2 und drahtlose Kommunikation des Kommunikationsmoduls ist also die WiFi-Kommunikation, zur Auswahl der nutzbaren Kanäle für die WiFi-Kommunikation wird die Steuereinheit 1 verwendet. Die Steuereinheit 1 ist mit dem Kommunikationsmodul WiFi-Modul 2 verknüpft, welches mittels Steuereinheit 1 in einen Zustand der drahtlosen Kommunikation einstellbar ist. Unter dem Begriff Zustand der drahtlosen Kommunikation wird hier drahtlose Kommunikation verstanden, bei welcher die Ausstrahlung und/oder der Empfang des Signals nur auf den ausgewählten nutzbaren Kanälen stattfindet. Die Kanäle sind bei dem ersten Beispiel der Ausführung in Frequenzbänder bzw. in Bandbereiche vereinigt.

Die Eingangsdaten in das Verfahren nach dem ersten Beispiel der Ausführung der Erfindung sind geographische Breite und Länge, Ausgang ist dann ein WiFi-Band oder -Bänder, auf welchen das WiFi-Kommunikationsmodul 2 senden und/oder empfangen kann, bzw. die Einstellung des WiFi-Moduls 2 in den Zustand der drahtlosen Kommunikation, bei welchem nur erlaubte Frequenzbänder und Kanäle genutzt werden.

Die Steuereinheit 1 ist mit dem Speicher 3 verknüpft, in welchem die Datenbank eingespeichert ist, welche geographische Bereiche enthält. Bei diesem Beispiel haben sie die Form eines Quadrats mit der Größe von $n°$ der geographischen Breite auf $n°$ der geographischen Länge, wobei $n$ eine natürliche Zahl ist. Unter Quadrat wird hier ein Bereich verstanden, der mittels eines bestimmten Intervalls der geographischen Breite und eines gleich großen Intervalls der geographischen Länge bestimmt ist. Konkrete Form und Größe eines solchen Bereichs, welcher in Längeneinheiten oder als eine Abbildung auf der Karte charakterisiert wird, kann sich in gewissem Maße unterscheiden, in Abhängigkeit von der gewählten Projektion oder von anderen Faktoren. So ein Bereich muss nicht unbedingt genau von quadratischer Form sein in geläufigem Sinne des Wortes. Jedem geographischen Bereich ist im Speicher 3 eine Menge verbotener oder beschränkter WiFi-Bänder zugeordnet, konkret ist für jeden geographischen Bereich festgelegt, ob in gegebenem Bereich das 2,4-GHz-Frequenzband zulässig ist, und ob das 5-GHz-Band erlaubt oder beschränkt ist, wobei ein beschränktes 5-GHz-Band bedeutet, dass die Kanäle 149 bis 165 verboten sind. Alternativ kann jedoch ein beschränktes 5-GHz-Band auch andere Kanäle einschließen, eventuell können einzelne andere Kanäle einer Regelung unterliegen, und nicht die Kanäle, welche in Frequenzbändern vereint sind.

Alternativ kann die Bestimmung der Menge der verbotenen Kanäle der drahtlosen Kommunikation (oder die Bestimmung der Einschränkungen der drahtlosen Kommunikation) auch auf eine andere Weise als mittels der Zuordnung der Menge der verbotenen WiFi-Bänder, welche im vorstehenden Absatz beschrieben ist, realisiert werden. Zum Beispiel kann die Bestimmung der Menge der verbotenen Kanäle auch mittels der Festlegung der Menge der erlaubten Kanäle realisiert werden (in Anbetracht dessen, dass die Anzahl der technisch verwendbaren Kanäle begrenzt ist, d.h. ein Verzeichnis der Kanäle der drahtlosen Kommunikation ist eine geschlossene Menge, ist die Bestimmung der erlaubten Kanäle im Ergebnis von gleichem Wert wie die Bestimmung der verbotenen Kanäle). In verschiedenen Ausführungen der vorgelegten Erfindung können so diese und auch andere Verfahren zur Bestimmung der Mengen der verbotenen Kanäle für einzelne geographische Bereiche oder für die Gruppen der geographischen Bereiche verwendet werden.

Geographische Bereiche sind in Innen- und Grenzbereiche 6, 5 aufgeteilt. Die Grenzbereiche 5 haben eine Größe 1° der geographischen Breite auf 1° der geographischen Länge und sind weiter in kleinere Unterbereiche 7 aufgeteilt. Unter Grenzbereichen 5 werden geographische Bereiche verstanden, durch welche eine Grenze 8 zwischen Staaten oder Regionen mit unterschiedlichen Einschränkungen der WiFi-Bänder, also mit unterschiedlichen Mengen der verbotenen Kanäle der WiFi-Kommunikation verläuft. In der Nähe der Grenze 8, also in den Unterbereichen 7, durch welche die gegebene Grenze 8 verläuft, ist es wegen der eingeschränkten Genauigkeit der Positionsbestimmung nicht möglich, festzustellen, auf welcher Seite der Grenze 8 sich das Fahrzeug befindet, und deswegen wird in diesen Unterbereichen 7 bei dem ersten Beispiel der Ausführung immer der Zustand der drahtlosen Kommunikation gewählt, welcher die Einschränkungen (beschränkte oder ausgeschaltete Frequenzbänder) auf beiden Seiten der Grenze 8 erfüllt, wie es weiter genauer beschrieben wird.

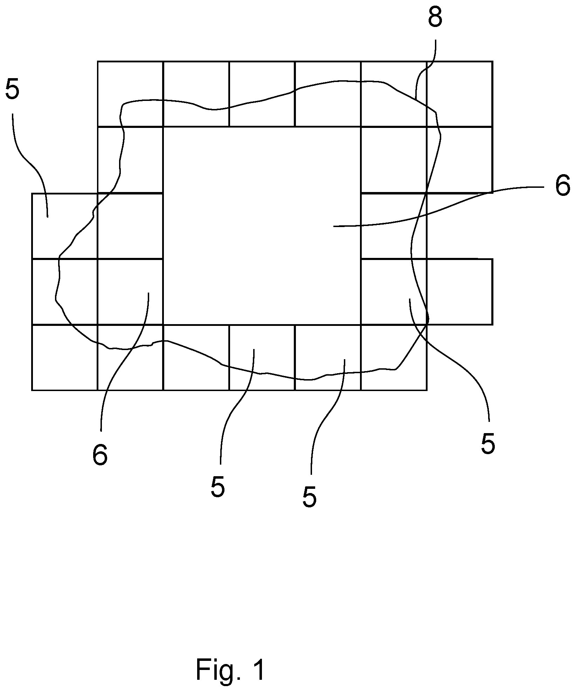

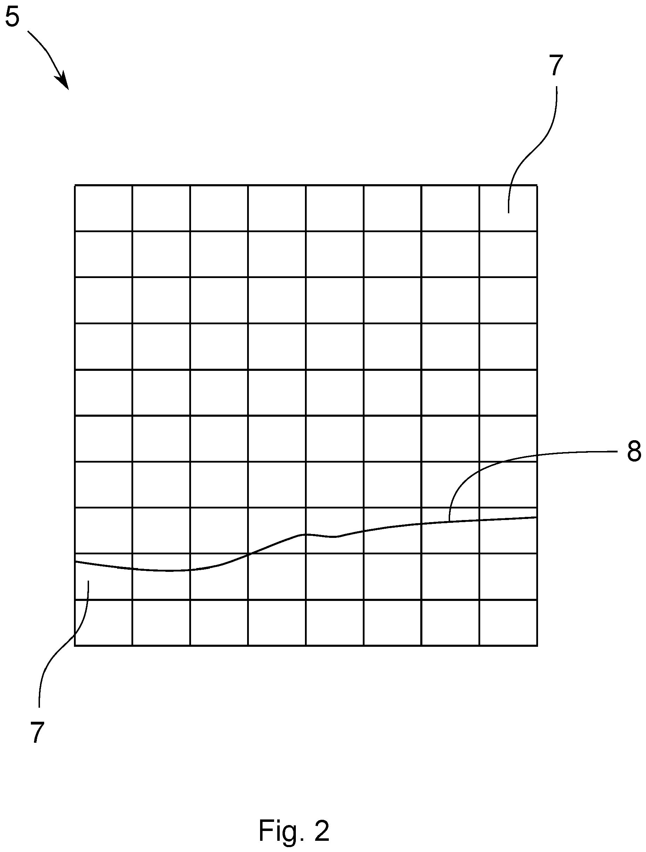

Die Fig.1 zeigt schematisch die Region auf der Karte, bzw. ihre Grenze 8, und diese Region beinhaltet geographische Gebiete. Es gibt zwei Innenbereiche 6 in dieser Region, der eine besteht aus neun Quadraten der Größe 1° auf 1°, er hat also die Größe 3° auf 3°. Einer der Grenzbereiche 5 (der zweite von rechts in der untersten Reihe der Bereiche) ist detaillierter in der Fig. 2 abgebildet, wo auch einzelne Unterbereiche 7 abgebildet sind.

Bei diesem Beispiel der Ausführung sind die Grenzbereiche 5 in der Richtung Nord - Süd in 10 Teile und in der Richtung West - Ost in 8 Teile aufgeteilt, also insgesamt in 80 Unterbereiche 7. In der Richtung Nord - Süd gleicht also die Auflösung (die Genauigkeit der festgestellten Position) dem Erdumfang in gegebener Richtung geteilt durch 3600, also ungefähr 40 000 km / 3600 ≈ 11,1 km, anders gesagt, in der Richtung Nord - Süd beträgt die Größe der Unterbereiche 0,1° der geographischen Breite, was in etwa 11 km entspricht. In der Richtung West - Ost hängt dann die Auflösung von der geographischen Breite (d.h. von der Winkelentfernung von dem Äquator) ab. Im Äquatorbereich entspricht ein Achtel des Grades annähernd 14 km, in der Nähe des Breitengrades 60° entspricht ein Achtel des Grades berechnet nach folgender Formel:

$$((40\ 000\ km\ /\ 360)\ /\ 8) * \cos(60°) \approx 6,5\ km.$$

Durch die Innenbereiche 6 verläuft keine Grenze 8 zwischen Staaten oder Regionen mit unterschiedlichen Einschränkungen der WiFi-Bänder, so dass in jedem Innenbereich 6 nur eine einzige Menge der verbotenen Kanäle, bzw. eine einzige Menge der erlaubten Kanäle festgelegt ist. Deswegen ist es nicht erforderlich, diese Bereiche in kleinere Unterbereiche 7 aufzugliedern, im Gegenteil, es ist möglich, größere Innenbereiche 6 zu bilden, und zwar überall dort, wo innerhalb des größten Teils der Karte gleiche Regeln für die WiFi-Kommunikation gelten. Zum Beispiel kann der größte Teil von Europa mit nur einem quadratischen Innenbereich 6 bedeckt werden, weil mit Ausnahme von Weißrussland in Europa und in anliegenden Meeren und Ozeanen keine Einschränkungen für die WiFi-Kommunikation bestehen. Es ist also nicht notwendig zwischen einzelnen Staaten (und auch nicht zwischen dem Festland und Meer) zu unterscheiden. Eine ähnliche Situation gilt auch für Inselstaaten, weil sich hinter ihrer Grenze Meer befindet, in dem es dieselben Einschränkungen gibt wie innerhalb des gegebenen Staats, oder es gibt dort keine Einschränkungen. Dank dieser Tatsache, der Bildung von größeren Innenbereichen 6, sinkt der Umfang der benötigten Speicherkapazität.

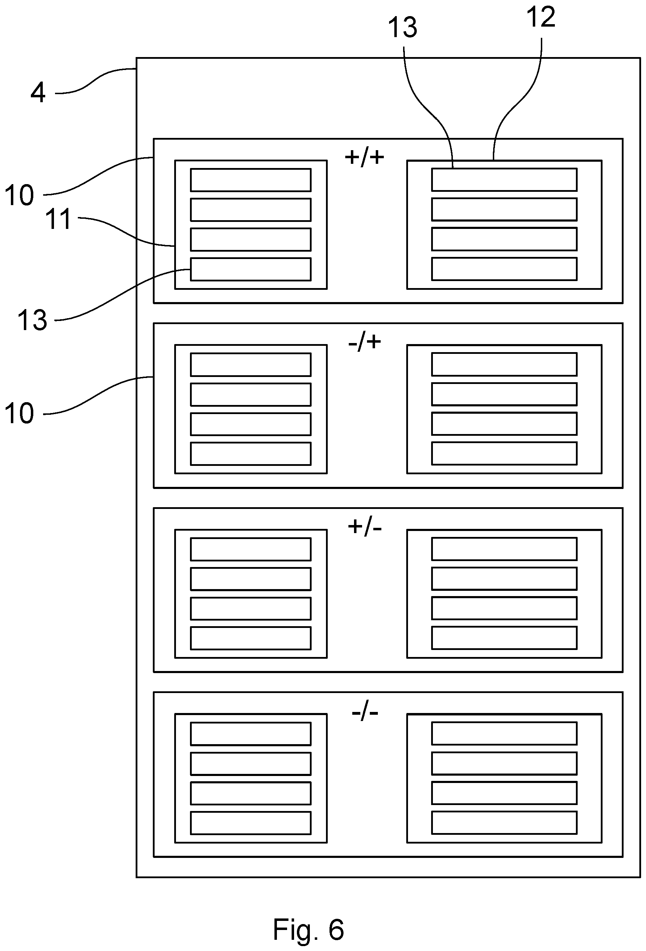

Die Datenbank 4 der geographischen Bereiche, eingelagert im Speicher 3, ist in vier geographische Zonen 10 aufgeteilt, jede von ihnen entspricht einem Viertel der Erdkugel. Geographische Bereiche sind den einzelnen Zonen 10 zugeordnet in Abhängigkeit von ihrer Lage gegenüber dem Äquator und dem nullten Meridian, also in Abhängigkeit von den Zeichen der Koordinaten einzelner Punkte aus dem gegebenen Bereich. Diese Unterteilung ist von Vorteil, weil die Koordinaten, welche geographische Bereiche in jeder Zone bestimmen, dann von Null anfangen können (d.h. von dem Schnittpunkt des Äquators mit dem nullten Meridian, wo sich diese Zonen 10 begegnen). Jede Zone 10 ist dann in Teil 11 mit Innenbereichen und Teil 12 mit Grenzbereichen unterteilt, jeder Teil ist dann weiter aufgegliedert in Sektionen 13 nach Kanälen und Frequenzbändern der drahtlosen Kommunikation, welche in gegebenen geographischen Bereichen erlaubt sind. Jeder Grenzbereich 5 ist also mehreren Sektionen 13 zugeordnet, weil ihm verschiedene Mengen der verbotenen Kanäle der drahtlosen Kommunikation zugeordnet werden können, die zu verschiedenen Regionen gehören, in welche der gegebene Grenzbereich 5 greift. Die Innenbereiche 6 bedecken jedoch immer einen Teil der Karte mit einer einzigen Menge der verbotenen Kanäle (und/oder WiFi-Bänder), so dass jeder Innenbereich 6 in nur eine Sektion 13 aufgeteilt ist. Diese Struktur der Datenbank 4 ist in Fig. 6 schematisch abgebildet.

Fig. 6 zeigt schematisch die Datenbank 4, welche vier Zonen 10 enthält, die als Rechtecke abgebildet sind. Jede Zone 10 ist mit zwei Zeichen bezeichnet, welche dem Zeichen vor der geographischen Breite und Länge entsprechen. Jede Zone 10 schließt den Teil 11 mit Innenbereichen und Teil 12 mit Grenzbereichen ein, welche dann weiter in einzelne Sektionen 13 aufgegliedert und als Spalten kleinerer länglicher Rechtecke angedeutet sind.

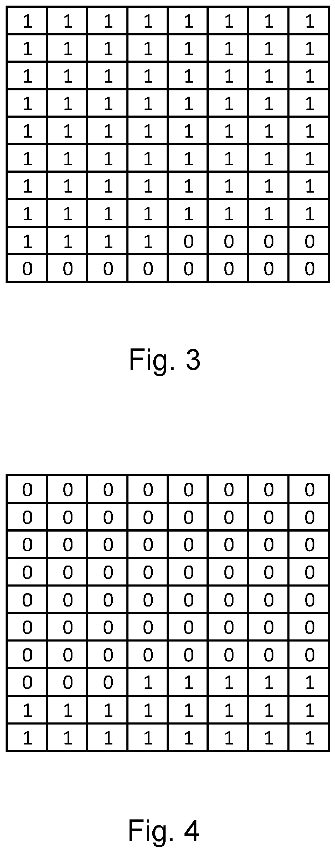

Jeder Unterbereich 7 jedes Grenzbereichs 5 ist in der Datenbank 4 mit einer Information versehen, die festlegt, ob in gegebenem Unterbereich 7 die bestimmte Menge der verbotenen Kanäle (bestimmt durch die gegebene Sektion 13) gilt oder nicht. Zum Beispiel ist Grenzbereich 5, in welchem die Grenze 8 zwischen der ersten Region mit der ersten Menge der verbotenen Kanäle (zum Beispiel der Region aus der Abb. 2) und der zweiten Region mit der zweiten Menge der verbotenen Kanäle (zum Beispiel nicht abgebildeter Region benachbart zu der Region aus der Abb. 2) liegt, zwei Sektionen 13 zugeordnet - der ersten Sektion 13 mit festgelegter erster Menge der verbotenen Kanäle und der zweiten Sektion 13 mit festgelegter zweiter Menge der verbotenen Kanäle. Die Fig. 3 und 4 enthalten Tabellen, welche die Information über die Gültigkeit der Einschränkungen in den Unterbereichen 7 des Grenzbereichs 5 aus der Fig. 2 enthalten. Die Tabelle aus der Fig. 3 enthält diese Informationen für die erste Sektion 13, die Tabelle aus der Fig. 4 für die zweite Sektion 13. Wie man bei einem Vergleich dieser zwei Abbildungen sehen kann, ist den Unterbereichen 7, durch welche in der Fig. 2 die Grenze 8 verläuft, der Wert 1 zugeordnet, also die Information, dass in ihnen gegebene Einschränkungen gelten, in beiden Tabellen. In diesen Unterbereichen 7 gelten also zwei unterschiedliche Einschränkungen, und falls sich der Wagen in einem von ihnen befindet, wird WiFi-Modul 2 in einen solchen Zustand der drahtlosen Kommunikation eingestellt, der beide angegebenen Einschränkungen erfüllt. Die Tabellen aus den Fig. 3 und 4 entsprechen also demselben Grenzbereich 5, d.h. beide Tabellen bestimmen Informationen für dieselben Unterbereiche 7, welche auf der Karte gleiche Stellen bedecken, aber sie sind in unterschiedlichen Teilen der Datenbank 4 gespeichert. Ähnlich ist der entsprechende Grenzbereich 5 zweimal in der Datenbank 4 gespeichert, kommt also in der Datenbank 4 zweimal vor in verschiedenen Sektionen 13.

Die erste Menge der verbotenen Kanäle gilt nur für die Unterbereiche 7, welche mindestens teilweise in erster Region liegen. Deswegen haben diese Unterbereiche 7 in der ersten Sektion 13 die Information zugeordnet, dass in ihnen die erste Menge der verbotenen Kanäle gilt. Für die Unterbereiche 7, welche vollständig außerhalb der ersten Region liegen, ist die erste Menge der verbotenen Kanäle nicht relevant. Deswegen haben diese Unterbereiche 7 in der ersten Sektion 13 die Information zugeordnet, dass in ihnen die erste Menge der verbotenen Kanäle nicht gilt, also ihnen ist in der Fig. 3 der Wert 0 zugeordnet. In der zweiten Sektion 13 sind den Unterbereichen 7 des gegebenen Grenzbereichs 5 Informationen zugeordnet, welche die Gültigkeit der zweiten Menge der verbotenen Kanäle bestimmen. Für die Unterbereiche 7, durch welche die Grenze 8 zwischen der ersten und der zweiten Region verläuft, müssen dann beide Mengen der verbotenen Kanäle gelten, denn wenn sich der Wagen in einem solchen Unterbereich befindet, ist es nicht möglich, aus der Datenbank 4 festzustellen, auf welcher Seite der Grenze 8 sich das Auto befindet, und deswegen ist es sicherer, die Anordnungen aus beiden Regionen zu erfüllen.

Die Datenbank 4 der geographischen Bereiche kann man zum Beispiel nach dem Algorithmus erstellen, welcher folgende Schritte beinhaltet:

- Aufstellung eines Verzeichnisses von Staaten mit zugeordneten Mengen der verbotenen Kanäle der drahtlosen Kommunikation;
- Unterteilung der Weltkarte in geographische Bereiche mittels Breitenkreise und Meridiane auf ganzzahligen geographischen Breiten und Längen;
- Unterteilung der geographischen Bereiche in Grenzbereiche 5, durch welche die Grenze 8 zwischen mindestens zwei Staaten mit unterschiedlichen Mengen der verbotenen Kanäle der drahtlosen Kommunikation verläuft, Innenbereiche 6 und sonstige geographische Bereiche;
- Zusammenlegung der Ansammlungen von Innenbereichen 6 in größere Innenbereiche 6;
- Unterteilung von jedem Grenzbereich 5 in Unterbereiche 7, wobei für jeden Unterbereich 7 festgelegt ist, ob in ihm einzelne (verschiedene) Mengen der verbotenen Kanäle der drahtlosen Kommunikation, die den Staaten zugeordnet sind, welche in gegebene Grenzbereiche 5 eingreifen, gelten oder nicht gelten;
- Einordnung der geographischen Bereiche in 4 Zonen 10 nach ihrer Lage in Bezug auf den Äquator und Null-Meridian;
- Einordnung der geographischen Bereiche in jeder Zone 10 in Teile 11 mit Innenbereichen und Teile 12 mit Grenzbereichen;
- Einordnung von jedem Teil 11 mit Innenbereichen und Teil 12 mit Grenzbereichen in jeder Zone 10 in Sektionen 13 nach zugeordneten Mengen der verbotenen Kanäle der drahtlosen Kommunikation (Grenzbereiche 5 fallen unter zwei oder mehrere Sektionen 13); und
- Speichern der eingeordneten geographischen Bereiche in der Datenbank 4.

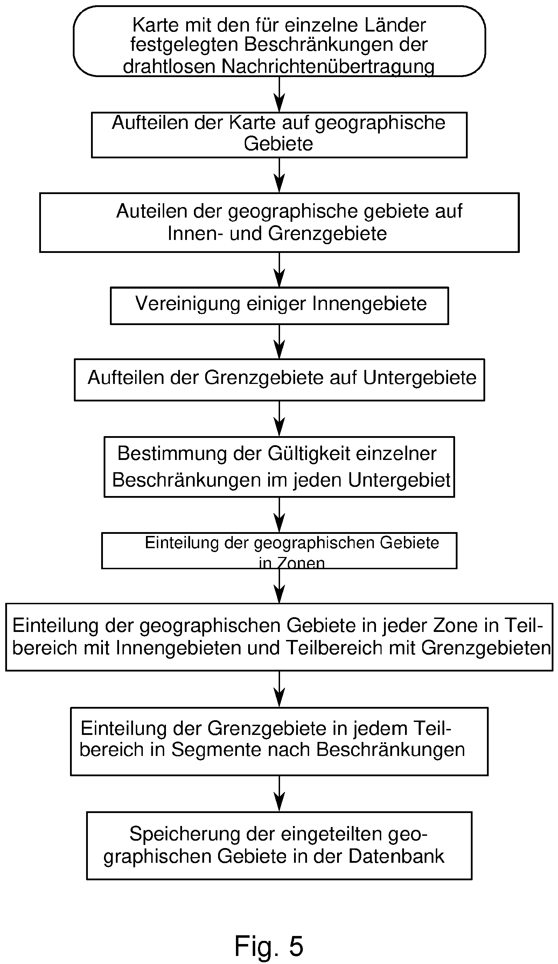

Dieser Algorithmus ist im Entwicklungsdiagramm dargestellt, welches in Fig. 5 gezeigt wird.

Die mit Hilfe dieses Algorithmus gebildeten geographischen Bereiche in der Datenbank 4 beinhalten also keine Information darüber, welchen Staat sie (teilweise) abdecken. In erstem Beispiel der Ausführung ermöglicht die Datenbank 4 nur die Zuordnung der Einschränkungen der drahtlosen Kommunikation, nicht die Bestimmung des konkreten Staats, in Abhängigkeit von der Position.

Die Zustände der drahtlosen Kommunikation, in welche das WiFi-Modul 2 eingestellt werden kann, werden bei dieser Ausführung aus der im Voraus festgelegten Menge der Zustände gewählt, welche folgende Zustände enthält: den Zustand mit ausgeschaltetem 2,4-GHz-Band, den Zustand mit ausgeschaltetem 5-GHz-Band, den Zustand mit ausgeschaltetem 2,4-GHz- und 5-GHz-Band, den Zustand mit eingeschaltetem 2,4-GHz- und 5-GHz-Band, den Zustand mit ausgeschaltetem 2,4-GHz-Band und mit beschränktem 5-GHz-Band, und den Zustand mit eingeschaltetem 2,4-GHz-Band und mit beschränktem 5-GHz-Frequenzband.

Der Algorithmus der Auswahlart der nutzbaren Kanäle der drahtlosen Kommunikation des Kommunikationsmoduls im Fahrzeug besteht dann aus folgenden Schritten:

- Bestimmung der Position mittels GPS-Positionierungsmodul 9;
- Bestimmung der Zone 10 der Datenbank 4 in Abhängigkeit von den Vorzeichen vor geographischen Koordinaten;
- Finden in der gegebenen Zone 10 der Datenbank 4 aller Vorkommen der geographischen Bereiche, welche die festgelegte Position enthalten, falls das erste gefundene Vorkommen zu dem Teil 11 mit Innenbereichen gehört (also dieser geographische Bereich ist in der Datenbank 4 nur einmal gespeichert), wird ein Zustand der drahtlosen Kommunikation ausgewählt, der nur die Kanäle der drahtlosen Kommunikation nutzt, welche in der Sektion 13, die den gegebenen Innenbereich 6 enthält, nicht verboten sind, und dann geht man zu dem letzten Schritt über; falls sich das erste gefundene Vorkommen im Teil 12 mit Grenzbereichen befindet, muss man alle Sektionen 13 im Teil 12 mit Grenzbereichen in gegebener Zone 10 durchsuchen (deswegen werden wegen der Möglichkeit, den Algorithmus schneller abzuschließen, vorzugsweise zuerst die Teile 11 mit Innenbereichen durchsucht);

- bei jedem gefundenen Vorkommen des Grenzbereichs 5 Auffinden des Unterbereichs 7, welcher die gegebene Position enthält;
- Auswahl des Zustands der drahtlosen Kommunikation, der nur Kanäle der drahtlosen Kommunikation nutzt, die nicht in der Vereinigung der Mengen der geltenden verbotenen Kanäle in gefundenen Unterbereichen 7 einbezogen sind; und
- Einstellung des WiFi-Moduls 2 in den gewählten Zustand der drahtlosen Kommunikation.

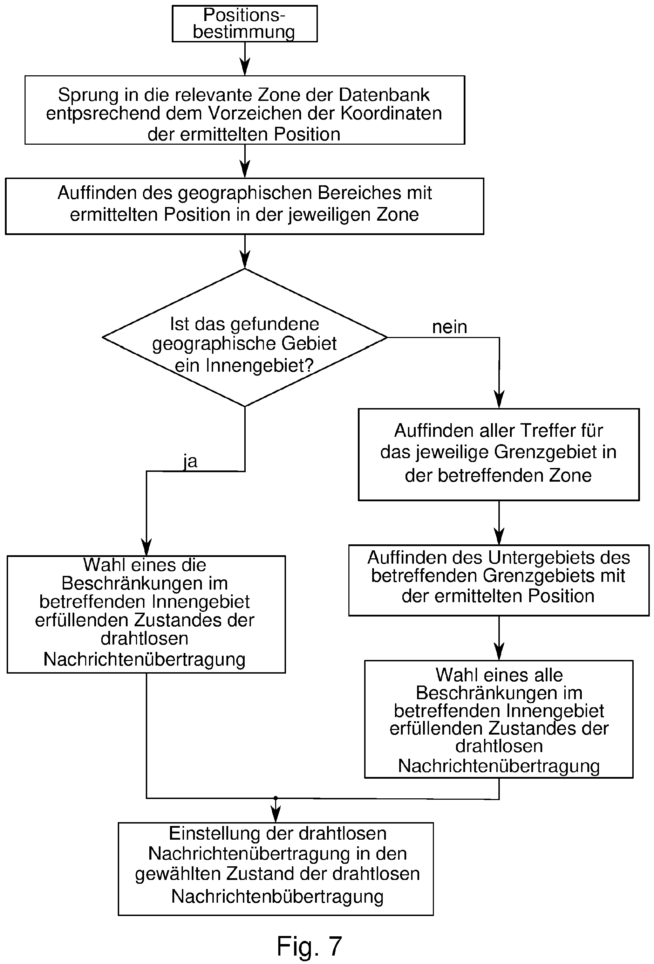

Dieser Algorithmus ist im Entwicklungsdiagramm in Fig. 7 dargestellt.

In Anbetracht der Tatsache, dass die Grenzbereiche 5 die Breite und Länge von einem Grad haben und durch Breitenkreise und Meridiane auf ganzzahligen Graden der gegebenen geographischen Koordinaten begrenzt sind, sind sie eindeutig durch einen Punkt definiert, zum Beispiel Position ihrer südwestlichen Ecke. In Anbetracht der Tatsache, dass für die Speicherung einer Koordinate im Speicher 3 1 B gebraucht wird, (geographische Länge bewegt sich im Rahmen einer Zone 10 der Datenbank 4, d.h. nach Vernachlässigung der Vorzeichen bewegt sie sich von 0 bis 180, man braucht also 8 Bits, geographische Breite bewegt sich von 0 bis 90, gebraucht werden 7 Bits) und für jeden von achtzig Unterbereichen 7 braucht man einen Bit, der bestimmt, ob in ihm die Menge der verbotenen Kanäle gilt (zum Beispiel Wert 1) oder nicht gilt (umgekehrter Wert), welche für die gegebene Sektion 13 bestimmt ist, für Speicherung eines Grenzbereichs 5 bzw. eines Vorkommens des Grenzbereichs 5, reichen 12 B der Speicherkapazität. In alternativen Ausführungen, mit anderer Größe und/oder Anzahl der geographischen Bereiche, kann selbstverständlich auch die Kapazität des Speichers, welche für Speicherung solcher geographischen Bereiche gebraucht wird, anders sein.

Ein Innenbereich 6 mit einer Breite und Länge von einem Grad kann mit nur einem Punkt definiert werden, zum Beispiel Position der südwestlichen Ecke, für dessen Speicherung man 2 B braucht. Ein Bit von diesen 2 B (der achte Bit bei der geographischen Breite, nicht genutzt bei Grenzbereichen 5) bestimmt dann, dass die Größe dieser Bereiche ein auf ein Grad beträgt. Der größere Innenbereich 6 muss mittels zwei Punkten definiert werden, zum Beispiel durch Position der nordöstlichen und südwestlichen Ecke, was 4 B erfordert, ein Bit davon bestimmt, dass die Größe dieses Bereichs nicht ein auf ein Grad beträgt (er bestimmt also, dass dieser Innenbereich 6 größer und durch zwei Punkte definiert ist). Statt Position der zweiten Ecke kann sich alternativ im Speicher eine Information über die Größe des gegebenen Bereichs befinden, d.h. Kantenlänge des gegebenen Quadrats.

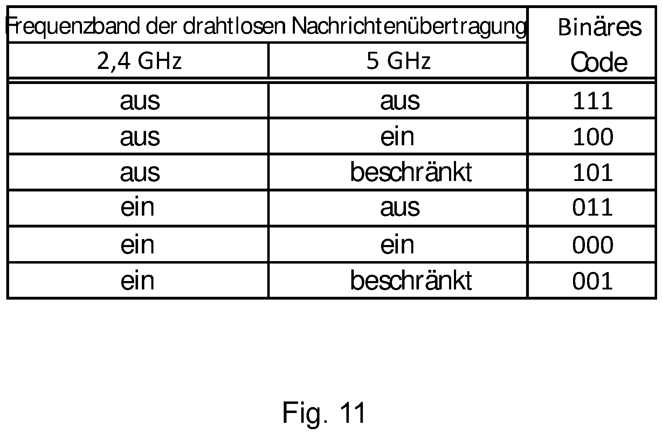

In diesem Beispiel der Ausführung ist die Menge der verbotenen Kanäle für jede Sektion 13 dadurch bestimmt, dass jeder Sektion 13 ein Zustand der drahtlosen Kommunikation aus der Menge der Zustände zugeordnet wird, wobei dieser Zustand der drahtlosen Kommunikation ein Zustand ist, welcher nur die in geographischen Bereichen in gegebener Sektion 13 erlaubte Kanäle verwendet, und falls es mehrere solche Zustände gibt, wird der am wenigsten restriktive ausgewählt. Jeder Zustand der drahtlosen Kommunikation aus der Menge der Zustände bei diesem Beispiel der Ausführung kann mittels drei Bits codiert werden, zum Beispiel so, wie es in der Tabelle in Fig. 11 angedeutet ist. Der Vorteil dieser Codierung besteht darin, dass man für die Unterbereiche 7 mit mehreren gültigen Mengen der verbotenen Kanäle den Zustand der drahtlosen Kommunikation mit der Zuhilfenahme der Funktion OR bestimmen kann, gerechnet nach Komponenten (d.h. nach Bits), wobei die Komponente der resultierenden Binärzahl Null ist, gerade wenn die entsprechenden Komponenten beider Eingänge Null sind. Diese Methode der Bestimmung der Mengen der verbotenen Kanäle für einzelne Sektionen 13, und dadurch für einzelne geographische Bereiche und eventuell auch für Unterbereiche 7, ist vorteilhaft, weil sie relativ niedrige Anforderungen an die Speicherkapazität und an den Rechner stellt. In Kombination mit der erwähnten Codierung sichert die Funktion OR, dass ihr Ausgang immer gleich oder mehr restriktiv ist als ihre Eingänge, so dass in der Nähe der Grenze 8 dann die Einschränkungen der drahtlosen Kommunikation erfüllt sind, welche auf beiden Seiten der Grenze 8 gelten.

Die Operation der OR-Funktion wird im folgenden Beispiel demonstriert. Nehmen wir an, ein bestimmter Grenzbereich gehört der ersten Sektion 13 an, mit zugeordnetem Zustand mit ausgeschaltetem 2,4-GHz-Band und eingeschaltetem 5-GHz-Band, dem der Binärcode 100 entspricht, und gleichzeitig der zweiten Sektion 13 mit zugeordnetem Zustand mit eingeschaltetem 2,4-GHz-Band und mit beschränktem 5-GHz-Band, dem der Binärcode 001 entspricht. Der Unterbereich 7, in dem sich das Auto befindet, hat in beiden Sektionen den Wert 1 zugeordnet bekommen (also dort verläuft die Grenze 8), der festlegt, dass in diesem Unterbereich 7 für die gegebene Sektion 13 die bestimmte Menge der verbotenen Kanäle gilt. In diesem Unterbereich 7 muss ein Zustand der drahtlosen Kommunikation eingestellt werden, welcher keine Kanäle aus der Menge der verbotenen Kanäle, welche in der ersten Sektion 13 bestimmt ist, und auch keine Kanäle aus der Menge der verbotenen Kanäle, welche in der zweiten Sektion 13 definiert ist, verwendet. Das Ergebnis der OR-Funktion mit diesen zwei Codes auf dem Eingang ist dann der Code 101, welcher dem Zustand der drahtlosen Kommunikation entspricht, bei dem das 2,4-GHz-Band ausgeschaltet ist und das 5-GHz-Band ist eingeschränkt. Es ist klar, dass dieser Endzustand der drahtlosen Kommunikation wirklich die Einschränkungen erfüllt, die für beide gegebenen Sektionen 13 bestimmt sind und gleichzeitig ist es der am wenigsten restriktive Zustand der drahtlosen Kommunikation aus der gegebenen Menge der Zustände, welcher beide Einschränkungen erfüllt.

Bei Ausführungen, wo die Menge der Zustände nicht vergleichbare Zustände der drahtlosen Kommunikation beinhaltet, d.h. Zustände der drahtlosen Kommunikation, bei welchen man nicht bestimmen kann, welcher von ihnen restriktiver ist, kann man einen von ihnen zum Beispiel zufällig wählen, oder im Voraus die Regeln festlegen, wie man solche nicht vergleichbare Zustände kombinieren soll, oder welcher aus ihnen ausgewählt werden soll. Bei anderen Mengen der Zustände in alternativen Ausführungen kann es notwendig sein, die Zustände der drahtlosen Kommunikation mittels anderer Anzahl von Bits zu codieren, und/oder kann es notwendig sein, die Zustände der drahtlosen Kommunikation, welche im denselben Unterbereich gelten, unter Zuhilfenahme von einer anderen geeigneten Funktion zu kombinieren. Zum Beispiel können die üblichen Mengenoperationen verwendet werden, so dass man von dem Verzeichnis der Kanäle für jede festgelegte Position alle Mengen der verbotenen Kanäle gültig für den Unterbereich, welcher die gegebene festgelegte Position beinhaltet, subtrahiert, bzw. man kann die Zusammenlegung dieser Mengen subtrahieren.

Die Suche in der Datenbank 4 nach geographischen Bereichen, in welche die Position des Automobils fällt, verläuft folgendermaßen: Aufgrund der Vorzeichen vor geographischen Koordinaten wird die Zone 10 der Datenbank 4 bestimmt. Danach werden die Vorzeichen vor geographischen Koordinaten nicht mehr gebraucht. Für die Bestimmung des geographischen Bereichs braucht man dann nur ganzzahlige Komponenten beider Koordinaten. In der gegebenen Zone 10 wird zuerst der Teil 11 mit Innenbereichen durchsucht. Falls der Innenbereich 6 gefunden wird, dessen südwestliche (SW) Ecke gleiche Koordinaten hat wie ganzzahlige Komponenten der Position, oder Innenbereich 6 größer ist als einmal ein Grad, für den gilt, dass beide Koordinaten der Ecke mit kleineren Koordinaten kleiner oder gleich sind als entsprechende Koordinaten der Position, und beide Koordinaten des Punktes mit größeren Werten der Koordinaten sind größer als entsprechende Koordinaten der Position, wurde der gesuchte geographische Bereich (und sein einziges Vorkommen) gefunden.

Alternativ ist es zum Beispiel möglich, geographische Bereiche nach Position der Mitte des gegebenen Bereichs (des Quadrats) zu speichern. Vorzugsweise könnte man geographische Bereiche so wählen (d.h. die Karte wäre in geographische Bereiche aufgeteilt), dass die Mitten der Bereiche auf ganzzahligen Koordinaten liegen würden. Beim Suchen könnte man dann anstelle ganzzahliger Komponenten der Koordinaten abgerundete Komponenten der Positionskoordinaten, zum Beispiel in Kombination mit Informationen über die Größe des gegebenen Bereichs, verwenden.

Wenn der gesuchte geographische Bereich nicht unter den Innenbereichen 6 gefunden wird, muss man alle Sektionen 13 des Teils 12 mit Grenzbereichen durchsuchen. Die Variable, welche den Zustand der drahtlosen Kommunikation bestimmt, welcher ausgewählt werden soll, wird auf 000 (d.h. keine Einschränkungen) eingestellt. Jede Sektion 13 wird bis zur Auffindung des Grenzbereichs 5 mit SW Ecke, welcher gleiche Koordinaten wie ganzzahlige Positionskomponenten aufweist, oder bis zum Ende durchsucht. Nach dem Auffinden des Vorkommens eines solchen Grenzbereichs 5 (oder alternativ bis zur Auffindung aller Vorkommen eines solchen Grenzbereichs 5) wird der relevante Unterbereich 7 gefunden.

Zur Auffindung der Unterbereiche 7 werden die Komponenten der Positionskoordinaten hinter dem Komma verwendet. Die Komponente der geographischen Länge wird mit acht, die Komponente der geographischen Breite mit zehn multipliziert und weiter werden nur ganzzahlige Komponenten dieser Produkte benutzt. Die Unterbereiche 7 sind in Zeilen und Spalten angeordnet, so wie es in der Tabelle in Fig. 3 und 4 zu sehen ist. Das Produkt, welches der geographischen Breite entspricht, bestimmt die Nummer der Spalte, das zweite Produkt bestimmt die Nummer der Zeile, in welcher sich der relevante Unterbereich 7 befindet (die Zeilen und Spalten werden von Null nummeriert). Wenn in gegebenem Unterbereich 7 die Menge der verbotenen Kanäle gilt, die für die gegebene Sektion 13 bestimmt ist, bestimmt die Variable den Zustand der drahtlosen Kommunikation und der Zustand-Code der drahtlosen Kommunikation, welcher der gegebenen Sektion 13 zugeordnet ist, wird in die Funktion OR eingefügt und stellt das Ergebnis den neuen Wert der Variablen dar und bestimmt den Zustand der drahtlosen Kommunikation.

Dieses Einfügen in die Funktion OR verläuft für jede Sektion 13, in der der vorgegebene Grenzbereich 5 gefunden wird und deren festgelegte Menge der verbotenen Zustände in gegebenem Unterbereich 7 gilt. Zum Schluss wird die drahtlose Kommunikation in den Zustand der drahtlosen Kommunikation mit Binär-Code eingestellt, welcher dem Endwert der Variablen, die den Zustand der drahtlosen Kommunikation bestimmt, entspricht. Sollte in irgendeinem Augenblick die Variable, welche den Zustand der drahtlosen Kommunikation bestimmt, den Wert 111 erreichen, kann der Algorithmus beendet und die drahtlose Kommunikation kann in den entsprechenden Zustand (beide Frequenzbänder ausgeschaltet) eingestellt werden.

In manchen Ausführungen kann immer zuerst die Sektion 13 mit strengsten Einschränkungen der drahtlosen Kommunikation, d.h. mit der mächtigsten Menge der verbotenen Zustände, durchsucht werden. Falls nämlich in manchem Unterbereich 7 Einschränkungen gelten, nach welchen das WiFi-Modul 2 ganz ausgeschaltet sein muss, hat es keinen Sinn zu kontrollieren, ob in gegebenem Unterbereich 7 auch noch andere Einschränkungen gelten. Generell, falls bei der Durchsuchung der Datenbank 4 festgestellt wird, dass für die festgelegte Position irgendwelche erste Menge der verbotenen Kanäle gilt, dann ist es sinnlos, Sektionen 13 durchsuchen, für die eine bestimmte zweite Menge der verbotenen Kanäle festgelegt ist, wenn die zweite Menge der verbotenen Kanäle eine Untermenge der ersten Menge der verbotenen Kanäle ist.

In manchen Ausführungen können geographische Bereiche, in welchen keine Einschränkungen gelten, völlig aus der Datenbank gelöscht werden. Falls dann kein geographischer Bereich gefunden wird, der die festgelegte Position enthält, kann man annehmen, dass sich das Fahrzeug in der gegebenen Position in einem Staat ohne Einschränkungen der drahtlosen Kommunikation befindet und die Menge der nutzbaren Kanäle alle Kanäle aus dem Verzeichnis der Kanäle enthält.

In alternativer Ausführung kann das WiFi-Modul 2 in Zustände der drahtlosen Kommunikation, welche aus einer anderen Menge der Zustände gewählt werden, einstellbar sein. Zum Beispiel können nur zwei Zustände zulässig sein - WiFi-Modul 2 eingeschaltet (die Menge der verbotenen Kanäle der drahtlosen Kommunikation ist leer) und WiFi-Modul 2 ausgeschaltet (die Menge der verbotenen Kanäle der drahtlosen Kommunikation ist ein Verzeichnis (aller) Kanäle der drahtlosen Kommunikation). Jedem Unterbereich 7 kann dann ein Bit zugeordnet werden, welches einen dieser Zustände bestimmt, anstatt des Bits, welches die Gültigkeit der Einschränkung, welche für die gegebene Sektion 13 bestimmt ist, bestimmt.

In weiterer alternativer Ausführung können die Innenbereiche 6 nicht nur quadratisch sein, sondern auch die Form eines Rechtecks haben. Eine rechteckige Form kann auch durch die Position von zwei Punkten definiert werden, und so kann die Anzahl der geographischen Bereiche noch mehr reduziert werden, und dadurch auch der Platz, der von der Datenbank 4 im Speicher 3 belegt ist. Die Zonen 10 der Datenbank 4 müssen bei manchen Ausführungen nicht in Teile nach Innen- und Grenzbereichen 6, 5, aufgegliedert werden. Man kann zum Beispiel jedem geographischen Bereich ein Bit zuordnen, welches festlegt, um welchen Typ des Bereichs es sich handelt. In alternativen Ausführungen können auch die Grenzbereiche 5, eine rechteckige Form haben. Beim Suchen der Unterbereiche 7, welche die festgelegte Position enthalten, würde man dann nur ganzzahlige Koordinaten, nicht nur ihre nichtganzzahligen Komponenten, verwenden.

Im zweiten Beispiel der Ausführung der vorgelegten Erfindung ist drahtlose Kommunikation wieder die WiFi-Kommunikation, realisiert mittels WiFi-Modul 2, der im Fahrzeug eingebaut ist. Die Auswahl der nutzbaren Kanäle wird realisiert teilweise mittels einer im Auto eingebauten Steuereinheit 1 und teilweise über eine zweite Steuereinheit, die ein Bestandteil des WiFi-Moduls 2 ist. Im Unterschied zu dem ersten Beispiel der Ausführung, bei der eine Steuereinheit 1 die Bestimmung der Einschränkungen der drahtlosen Kommunikation für die gegebene Position und auch die Einstellung des WiFi-Moduls 2 übernimmt, und zwar so, dass es nur auf Kanälen arbeitet, welche den gegebenen Einschränkungen nicht unterliegen, bestimmt bei diesem Beispiel der Ausführung eine Steuereinheit 1 aufgrund der Position den Code des Staats, in dem sich das Fahrzeug befindet, und in das Kommunikationsmodul, WiFi-Modul 2, übermittelt diese Steuereinheit 1 nur den Code des Staates. Die Einstellung des WiFi-Moduls 2 wird dann in dem WiFi-Modul 2, bzw. in seiner eingebauten zweiten Steuereinheit, realisiert. Die Einstellung der verwendeten Kanäle mittels des gelieferten Codes des Staates, zum Beispiel des aus zwei Buchstaben bestehenden ISO 3166-1 alpha-2-Codes, gehört zu gängigen Komponenten der WiFi-Kommunikationsmodule 2.

Die Eingänge in die Funktion nach dem zweiten Beispiel der Ausführung der Erfindung sind geographische Breite und Länge, der Ausgang ist dann die Einstellung des WiFi-Moduls 2 in den Zustand der drahtlosen Kommunikation, der nur erlaubte Frequenzbänder und Kanäle aufgrund des festgestellten Staat-Codes benützt.

Genauso wie in dem ersten Beispiel der Ausführung dieser Erfindung ist die Steuereinheit 1 mit dem Speicher 3 verknüpft, in welchem sich die Datenbank 4 befindet, welche geographische Bereiche enthält, bei diesem Beispiel der Ausführung sind es Rechtecke mit Abmessungen von $n°$ der geographischen Breite auf $m°$ der geographischen Länge, wobei $n, m$ natürliche Zahlen sind. Für jeden geographischen Bereich ist im Speicher 3 der Code des Staats festgelegt.

Geographische Bereiche sind in Innen- und Grenzbereiche 6, 5 aufgegliedert. Die Grenzbereiche 5 haben eine Größe 1° der geographischen Breite auf 1° der geographischen Länge und sind weiter in kleinere Unterbereiche 7 aufgeteilt. Als Grenzbereiche 5 werden die geographischen Bereiche bezeichnet, durch welche die Grenze 8 zwischen den Staaten verläuft. Im Unterschied zu dem ersten Beispiel der Ausführung ist im zweiten Beispiel der Ausführung jedem Unterbereich 7 nur ein Staat zugeordnet, welcher diesen Unterbereich 7 einschließt. Es ist also nicht notwendig, die Einschränkungen mittels logischer Aggregation (Funktion OR) zu kombinieren.

Falls durch den Unterbereich 7 eine Grenze 8 verläuft, gehört der Unterbereich zu dem Staat mit strengeren Einschränkungen. Gegenüber dem ersten Beispiel der Ausführung geht es grundsätzlich also um eine Kombination der Einschränkungen, in den Unterbereichen 7, in welchen mehrere unterschiedliche Einschränkungen gelten, findet sie bei der Bildung der Datenbank 4 statt. In dem Fall, wenn auf einer Seite der Grenze 8 das 2,4-GHz-Band ausgeschaltet werden muss und auf der anderen Seite das 5-GHz-Band abgeschaltet werden muss, also wenn diese Einschränkungen nicht vergleichbar sind, wird als stärkere Beschränkung das Abschalten des 5-GHz-Bandes betrachtet, und der Unterbereich 7 wird also dem Staat zugeordnet, in dem das 5-GHz-Band abgeschaltet werden muss. Manche Unterbereiche 7 kann man auch den Staaten mit schwächeren Einschränkungen zuordnen, zum Beispiel dann, wenn die Wahrscheinlichkeit deutlich größer ist, dass sich das Fahrzeug in dem Staat mit schwächeren Einschränkungen befinden wird. Diese Wahrscheinlichkeit kann beim Aufbau der Datenbank 4 zum Beispiel aufgrund des Unterschiedes in der Bevölkerungsdichte auf einer und auf anderer Seite der Grenze 8 beurteilt werden, oder aufgrund der unterschiedlichen Dichte der Verkehrswege u.Ä. Zum Beispiel, wenn sich auf einer Seite der Grenze 8 eine dicht bewohnte Stadt befindet, und auf der anderen Seite überwiegend eine Wüste ist, ist es wahrscheinlicher, dass der betreffende Wagen in der Stadt gefahren wird, und es kann deswegen vorteilhafter sein, in der Nähe der Grenze 8 Einschränkungen aus dem Staat zu übernehmen, in dem die Stadt liegt, auch wenn diese Einschränkungen schwächer wären.

Bei diesem Beispiel der Ausführung sind die Grenzbereiche 5 in 10 Teile in der Nord-Süd-Richtung und in 8 Teile in der Richtung West-Ost aufgeteilt, genauso wie beim ersten Beispiel der Ausführung. Die Innenbereiche 6 werden bei der Erstellung der Datenbank 4 wieder zusammengelegt, so dass sie größer als 1° auf 1° sein können, und sie können auch rechteckig sein.

Die Datenbank 4 ist durch den Äquator und den nullten Meridian in vier geographische Zonen 10 aufgeteilt, jede entspricht einem Viertel der Erdkugel. Jede Zone 10 ist wieder in Sektionen 13 aufgegliedert, bei dieser Ausführung entspricht jedoch jede Sektion 13 einem Staat. Jeder Grenzbereich 5 ist wieder mehreren Sektionen 13 zugeordnet, weil diese Grenzbereiche teilweise in mehrere Staaten gehören. Die Innenbereiche 6 decken jedoch immer einen Teil eines einzigen Staats ab, so dass jeder Innenbereich 6 nur gerade einer Sektion 13 zugeordnet wird.

Jeder Unterbereich 7 jedes Grenzbereichs 5 in jeder Sektion 13 wird in der Datenbank 4 mit einer Information versehen, die bestimmt, ob dieser Unterbereich 7 zu dem Staat gehört, dem die gegebene Sektion 13 entspricht. Zum Beispiel ist jedem Unterbereich 7 der Wert 1 in der Sektion 13 zugeordnet, welche dem Staat entspricht, in welchen (aufgrund der Entscheidung, welche bei der Erstellung der Datenbank 4 getroffen wurde) der gegebene Unterbereich 7 gehört, und ansonsten der Wert 0. Selbstverständlich ist auch eine Zuordnung der umgekehrten oder völlig anderen Werte möglich.

Die Erstellung der Datenbank 4 der geographischen Bereiche kann zum Beispiel nach dem Algorithmus, der folgende Schritte enthält, realisiert werden:

- Unterteilung der Weltkarte in geographische Bereiche mittels Breitenkreise und Meridiane auf ganzzahligen geographischen Breiten und Längen;
- Unterteilung der geographischen Bereiche in Grenzbereiche 5, durch welche die Grenze 8 zwischen mindestens zwei Staaten verläuft, und in Innenbereiche 6, welches sonstige geographische Bereiche sind;
- Zusammenlegung der Ansammlung der Innenbereiche 6 in größere Innenbereiche 6;
- Erschaffung von 4 Zonen 10 in der Datenbank 4 und Aufgliederung der geographischen Bereiche in Zonen 10 nach ihrer Position gegenüber dem Äquator und dem nullten Meridian;
- Einordnung der geographischen Bereiche in jeder Zone 10 in Sektionen 13 nach einzelnen Staaten und Zuordnung des Code des gegebenen Staats zu jeder Sektion 13 (Grenzbereiche 5 entfallen in zwei oder mehrere Sektionen 13);
- Aufstellung der Sektionen 13 in jeder Zone 10 nach Relevanz;
- Unterteilung jedes Grenzbereichs 5 in Unterbereiche 7, wobei für jeden Unterbereich 7 ein Staat bestimmt wird, in welchen dieser Unterbereich 7 gehört, und in entsprechender Sektion 13 ist diesem Unterbereich 7 der Wert 1 zugeordnet, wogegen in anderen Sektionen 13, welche den gegebenen Grenzbereich 5 und seine Unterbereiche 7 enthalten, diesem Unterbereich 7 der Wert 0 zugeordnet wird;
- Abspeichern der eingeordneten geographischen Bereiche in die Datenbank 4.

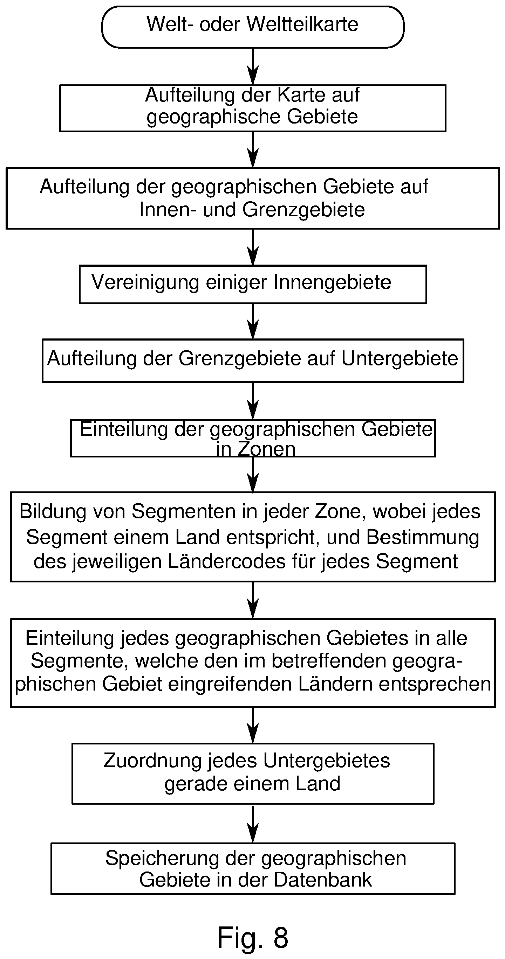

Dieser Algorithmus ist im Entwicklungsdiagramm dargestellt, der sich in der Fig. 8 befindet. Die Zuordnung der Mengen der verbotenen Kanäle zu jedem Code des Staats erstellt das WiFi-Modul 2 auf der Grundlage der Daten, welche im Speicher des WiFi-Moduls 2 abgespeichert sind. Alternativ kann die Zuordnung der Mengen der verbotenen Kanäle eine Komponente der Datenbank 4 nach dem höher beschriebenen Algorithmus sein, oder diese Zuordnung kann auf einem entfernten Server stattfinden, zu dem das WiFi-Modul 2 oder eine andere Komponente den Code des Staats versendet, und aus dem dann die Menge der verbotenen Kanäle empfangen wird. Die erwähnten Werte 0 und 1 sind nur Beispiele möglicher Werte, welche zur Bestimmung der Gültigkeit der Einschränkungen aus der gegebenen Sektion 13 für den gegebenen Unterbereich 7, dienen, d.h. Zugehörigkeit des Unterbereichs 7 zum Staat, welcher der gegebenen Sektion 13 entspricht. Man kann beliebige andere Werte nutzen, aber aus dem Sichtpunkt der Einsparung der Speicherkapazität ist es von Vorteil, zur Bestimmung der Gültigkeit der Einschränkungen in den Unterbereichen 7 Informationen zu nutzen, die durch den Wert eines Bits ausgedrückt werden können.

Im Schritt der Aufstellung der Sektionen 13 nach der Relevanz wird jede Zone 10 so angeordnet, dass die Suche bei den am meisten relevanten Staaten aufgenommen wird. Die Stufe der Relevanz wird aus dem Sichtpunkt der hier vorausgesetzten Wahrscheinlichkeit beurteilt, dass sich das Fahrzeug in einem Staat befinden wird, welcher der gegebenen Sektion 13 entspricht. Zum Beispiel, falls man bei der Zusammenstellung der Datenbank 4 die Verwendung des Fahrzeugs vor allem in Mitteleuropa voraussetzt, würde man als am meisten relevant die mitteleuropäischen Staaten betrachten. Andere Staaten in Europa wären dann weniger relevant und die Staaten auf anderen Kontinenten wären noch weniger relevant. Für die Fahrzeuge, welche für die Märkte zum Beispiel in Amerika oder in Asien bestimmt sind, wären umgekehrt europäische Staaten weniger relevant.

Der Algorithmus der Auswahlart nutzbarer Kanäle der drahtlosen Kommunikation nach dem zweiten Beispiel der Ausführung der vorgelegten Erfindung beinhaltet dann folgende Schritte:

- Bestimmung der Position mittels GPS-Positionierungsmodul 9;
- Bestimmung der Zone 10 Datenbank 4 in Abhängigkeit von den Zeichen vor geographischen Koordinaten;

- Durchsuchung der Sektionen 13 in der gegebenen Zone 10;
- Auffinden des ersten Vorkommens des geographischen Bereichs, welcher die festgelegte Position in einer Sektion 13 enthält, wenn dieser Bereich ein Innenbereich 6 ist (also dieser Bereich in der Datenbank 4 nur einmal gespeichert ist), wird in der Datenbank 4 der Code des Staates ausgesucht, welcher für die gegebene Sektion 13 festgelegt ist, und man geht zum vorletzten Schritt über;
- Auffinden des Unterbereichs 7 des gegebenen Grenzbereichs 5, welcher die festgelegte Position enthält; falls der gegebene Unterbereich 7 in einen Staat gehört, welcher der entsprechenden gegebenen Sektion 13 entspricht, wird in der Datenbank 4 der Code des Staats ausgesucht, welcher für die gegebene Sektion 13 bestimmt ist, und dann geht man zum vorletzten Schritt über;
- Auffinden eines weiteren Vorkommens des gegebenen Grenzbereichs 5 in einer anderen Sektion 13 in der gleichen Zone 10 und Rückkehr zum vorherigen Schritt;
- Versenden des gefundenen Codes des Staats in das WiFi-Modul 2; und
- Zuordnung der Menge der verbotenen Kanäle zum gegebenen Code des Staats im WiFi-Modul 2 und Einstellung des WiFi-Moduls 2 so, dass es keinen Kanal aus der Menge der verbotenen Kanäle benützt.

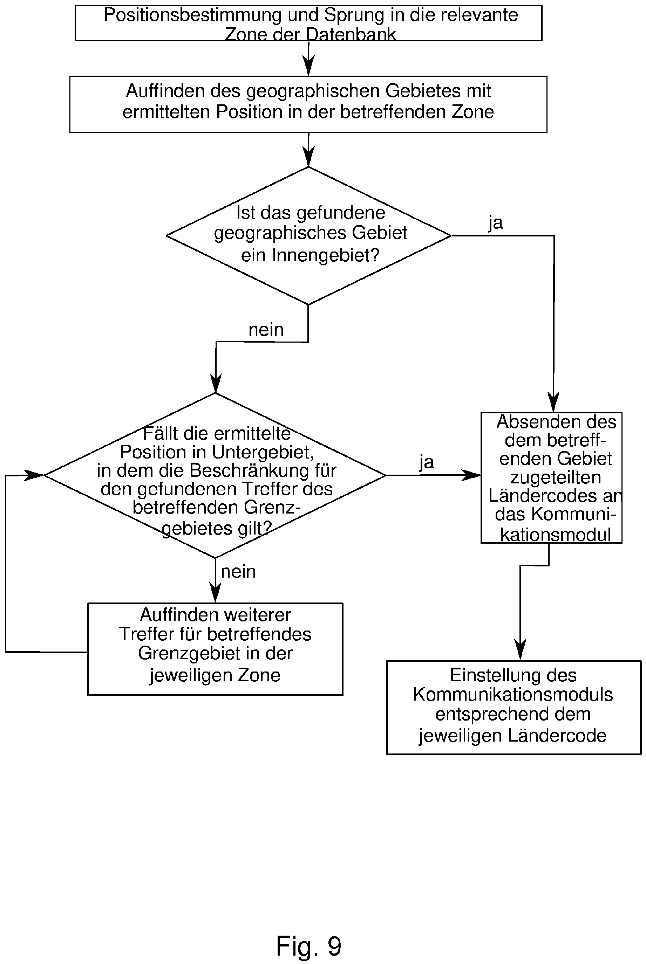

Dieser Algorithmus ist im Entwicklungsdiagramm dargestellt, gezeigt in Fig. 9.

Zum Abspeichern der einzelnen geographischen Bereiche in die Datenbank 4 wird hier dieselbe Speicherkapazität gebraucht wie bei dem ersten Beispiel der Ausführung. In Anbetracht der Tatsache, dass die Datenbank 4 bei dieser Ausführung zuerst von den am meisten relevanten Staaten durchsucht wird und die Suche nicht nur bei der Auffindung des Innenbereichs 6, welcher die gegebene Position enthält, sondern auch beim Auffinden des Grenzbereichs 5 beendet wird, soweit sein Unterbereich 7, der die gegebene Position enthält, zu dem gegebenen Staat gehört, kann der Prozess nach dem zweiten Beispiel der Ausführung im Durchschnitt schneller ablaufen, als die Aktion nach dem ersten Beispiel der Ausführung.

In Anbetracht der Tatsache, dass bei dem zweiten Beispiel der Ausführung einzelne Staaten, und nicht nur Regionen mit unterschiedlichen Mengen der verbotenen Kanäle wie bei dem ersten Beispiel der Ausführung unterschieden werden, kann die Datenbank 4 bei einem zweiten Beispiel der Ausführung höhere Ansprüche an die Speicherkapazität stellen. Das Verfahren nach dem zweiten Beispiel der Ausführung kann aber zusätzlich im Ausgang auch die Information darüber bieten, in welchem Staat sich das Fahrzeug befindet.

Die Auffindung des geographischen Bereichs, in welchem die Position des Fahrzeugs festgestellt ist, kann in der Datenbank 4 genauso ablaufen, wie es für das erste Beispiel der Ausführung beschrieben wird.

Falls der gefundene Bereich ein Grenzbereich 5 ist, muss man den relevanten Unterbereich 7 finden, was in gleicher Weise wie bei dem ersten Beispiel der Ausführung durchgeführt werden kann. Falls dem gegebenen Unterbereich 7 der Wert 1 zugeordnet wird, d.h. dieser Unterbereich 7 gehört zu dem Staat, dem die gerade untersuchte Sektion 13 entspricht, ist die Durchsuchung der geographischen Bereiche am Ende. Ansonsten wird ein weiterer Grenzbereich 5 gesucht, der die festgelegte Position enthält (von einer anderen Sektion 13).

Bei manchen alternativen Ausführungen, insbesondere wenn mehr Speicherkapazität zur Verfügung steht und/oder wünschenswert ist, dass der Algorithmus der Auswahlart der nutzbaren Kanäle schneller verläuft, kann in jeder Sektion 13, d.h. für jeden Staat, eine Information gespeichert werden, welche auf die Sektionen 13 hinweist, welche den Staaten in der Nachbarschaft entsprechen. Wenn in irgendwelcher Sektion 13 ein Grenzbereich 5 gefunden wird, der die festgelegte Position enthält, ist es naheliegend, dass für die Suche nach weiteren Grenzbereichen 5, welche diese Position enthalten, nur die Sektionen 13 in benachbarten Staaten relevant sind, es ist also nicht notwendig, andere Sektionen 13 zu durchsuchen. Also wenn zum Beispiel als erstes Vorkommen des Grenzbereichs 5, der die festgelegte Position enthält, ein Grenzbereich 5 gefunden wird, durch den die Grenze von Polen verläuft, aber dem gegebenen Unterbereich 7, der die festgelegte Position enthält, der Wert 0 zugeordnet ist, so dass der Unterbereich nach Polen nicht gehört, ist es sinnvoll im Weiteren die Grenzbereiche 5 in den Sektionen 13 zu durchsuchen, welche zum Beispiel Deutschland oder der Tschechischen Republik entsprechen, wogegen es nicht notwendig ist, die Sektionen zu prüfen, welche Italien oder Österreich entsprechen. Die Sektion, welche Polen entspricht, kann so eine Information enthalten, welche auf eine Sektion in Deutschland oder in der Slowakei hinweist, so dass der Algorithmus bei der Durchsuchung der Datenbank nach dem Auffinden des gegebenen Grenzbereichs in der Sektion 13, die Polen entspricht, auf die wirklich relevanten Sektionen 13 orientiert wird und man verliert keine Zeit mit der unnötigen Durchsuchung der restlichen Teile der Datenbank 4.

In weiteren Ausführungen, wenn man die Ansprüche auf die Speicherkapazität und/oder rechnerische Komplexität des erfindungsgemäßen Verfahrens noch stärker reduzieren muss, ist es nicht notwendig, die Grenzbereiche 5 in Unterbereiche 7 aufzuteilen. Den Zustand der drahtlosen Kommunikation kann man dann als ein Zustand wählen, der nur die Kanäle der drahtlosen Kommunikation benützt, welche in dem gegebenen Grenzbereich 5 nicht verboten sind, d.h. welche in keiner der Regionen verboten sind, auf deren Grenze 8 der gegebene Grenzbereich 5 liegt. Für das zweite Beispiel der Ausführung würde diese Modifikation bedeuten, dass der gesamte Grenzbereich 5 zu dem Staat mit strengeren Einschränkungen gehört. Für das erste Beispiel der Ausführung würde diese Modifikation bedeuten, dass sich die Einschränkungen mittels der OR-Funktion auf dem Niveau der Grenzbereiche 5, anstatt für die Unterbereiche 7 kombinieren.

In alternativen Ausführungen kann die Größe der geographischen Bereiche beliebig anders sein. Die Verkleinerung der Bereiche kann die Genauigkeit der Bestimmung der Position erhöhen, aber die Ansprüche auf die Speicherkapazität würden steigen und umgekehrt. Die Form der geographischen Bereiche, und zwar auch der Grenzbereiche, kann auch anders als quadratisch sein, zum Beispiel können sie die Form eines Rechtecks, Dreiecks, Sechsecks usw. haben. Also können sowohl Innen- als auch Grenzbereiche 6, 5 mit zwei oder mehreren Punkten, mit einer Kombination in der festgelegten Form und/oder Größe mit einem oder mit mehreren Punkten u.Ä. definiert werden.

Die Aufteilung der Grenzbereiche 5 in Unterbereiche 7 kann sich in Abhängigkeit von der geographischen Breite ändern. Die Teilung kann in Richtung Äquator feiner sein, so dass die Größe der Unterbereiche 7 in Kilometern sich in Abhängigkeit von der geographischen Breite nicht so wesentlich ändern wird. In der Ausführung mit variabler Teilung der Grenzbereiche 5 muss man auch die Bestimmung des Unterbereichs 7, in welchen die gegebene Position fällt, modifizieren, konkret muss man auch den Koeffizienten, mit welchem die Komponenten der Koordinaten hinter dem Komma multipliziert werden, als Variable einstellen.

Die Aufteilung kann sich nicht nur in Abhängigkeit von der geographischen Breite ändern. Es ist zum Beispiel möglich, die Grenzbereiche 5 der mehr relevanten Staaten, oder Grenzbereiche 5 der Staaten, in welchen eine korrekte Auswahl der nutzbaren Kanäle der drahtlosen Kommunikation wichtiger ist, feiner zu teilen. Diese Variabilität muss sich wiederum im Koeffizienten für die Multiplikation der nicht-ganzzahligen Koordinatenkomponenten widerspiegeln.

Manche der oben beschriebenen Modifikationen für einige Beispiele der Ausführung können auch für einige andere Beispiele der Ausführung oder für alternative Ausführungen genutzt werden. Genauso sind für alle vorgestellten Ausführungen auch andere Modifikationen möglich, wie es den Fachleuten in diesem Bereich bekannt ist.

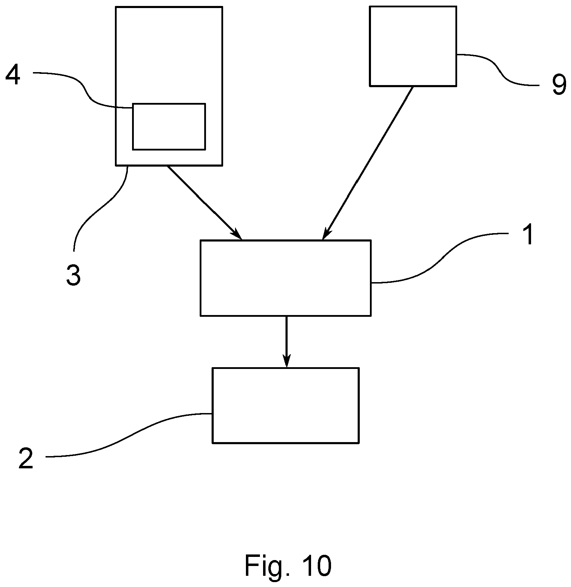

Der Gegenstand der Erfindung ist weiter auch ein Personenwagen, welcher das WiFi-Kommunikationsmodul 2 mit der Steuereinheit 1, Speicher 3 und GPS-Positionierungsmodul 9 enthält. Die Steuereinheit 1 kann Informationen aus dem Positionierungsmodul 9 und aus dem Speicher 3 empfangen und dem WiFi-Modul 2 Anweisungen geben (wie es in der Fig. 10 schematisch dargestellt ist, wo die Pfeile die Richtung der Übergabe von Informationen zwischen den Komponenten der angezeigten Vorrichtung anzeigen), welcher dann auf bestimmten Kanälen oder auf bestimmten Wifi-Bändern funktioniert, abhängig von diesen Anweisungen. Dieser Speicher 3 enthält die Datenbank 4, welche ähnlich oder gleich wie die höher beschriebene Datenbank 4 sein kann, oder es kann sich um eine beliebige andere Datenbank 4 handeln, welche geographische Bereiche mit festgelegten Mengen der verbotenen Kanäle der drahtlosen Kommunikation enthält. Die Steuereinheit 1 empfängt Informationen aus dem Positionierungsmodul 2 und stellt mit Nutzung der erwähnten Datenbank 4 und der Auswahlart der nutzbaren Kanäle der drahtlosen Kommunikation entsprechend der Erfindung das WiFi-Modul 2 ein. Die Einstellung des WiFi-Moduls 2, also die Auslösung der Vorrichtung nach der Erfindung, kann zum Beispiel in regelmäßigen Zeitintervallen, nach einer bestimmten Fahrstrecke, in Abhängigkeit von den Instruktionen des Fahrers u.Ä. erfolgen.

Die Vorrichtung in der Ausführung nach zweitem Beispiel der Ausführung kann die gleiche Struktur haben wie die, die oben beschrieben und in Fig. 10 veranschaulicht ist. Die Steuereinheit 1 in dieser Ausführung überreicht dem WiFi-Modul 2 keine Anweisungen, die direkt die Einstellung der nutzbaren Kanäle betreffen, sondern sie übergibt an das WiFi-Moduls 2 nur den Code des Staates. Das WiFi-Modul 2 beinhaltet einen eigenen Speicher und eine zweite Steuereinheit, dieser Speicher schließt eine Tabelle oder Datenbank ein, in welcher für jeden Code des Staates die Menge der verbotenen, eventuell erlaubten Kanäle der drahtlosen Kommunikation gefunden werden kann, wobei diese Suche von der zweiten Steuereinheit im WiFi-Modul 2 verwirklicht wird, die anschließend den Kommunikationsteil des WiFi-Moduls 2 in Abhängigkeit von der gegebenen Menge der verbotenen Kanäle einstellt.

In manchen Ausführungen kann das WiFi-Kommunikationsmodul 2 die Informationen von einem ortsfernen Server empfangen und die Steuereinheit 1 kann die Daten aus dem Speicher 3 nicht nur lesen, sondern auch eingeben, so dass es möglich ist, die Datenbank 4 zu aktualisieren, wenn von einem ortsfernen Server die Information über eine Änderung der Mengen der verbotenen Kanäle der drahtlosen Kommunikation in einem Staat empfangen wird. Alternativ kann die Datenbank 4 aktualisiert werden, auch ein komplettes Überschreiben der veralteten Datenbank 4 mit neuen Daten ist möglich, jedoch nur mit Anwendung einer Kabelverbindung, zum Beispiel in einer Werkstatt.

Erwähnte Vorrichtung kann auch in beliebige sonstige Fahrzeuge, zum Beispiel in Busse, Züge u.Ä. eingebaut werden.

Verzeichnis der Bezugszeichen

1     - Steuereinheit

2     - WiFi-Modul

3     - Speicher

4     - Datenbank

5     - Grenzbereich

6     - Innenbereich

7     - Unterbereich

8     - Grenze

9     - Positionierungsmodul

10     - Zone

11     - Teil mit Innenbereichen

12     - Teil mit Grenzbereichen

13     - Sektion

**Patentansprüche**

1. Verfahren zur Auswahl nutzbarer Kanäle einer drahtlosen Kommunikation eines Kommunikationsmoduls eines Fahrzeugs aus dem Verzeichnis der Kanäle der drahtlosen Kommunikation, welche von dem Kommunikationsmodul des Fahrzeugs in Abhängigkeit von einer geographischen Position des Fahrzeugs unterstützt werden mit Hilfe einer Steuereinheit (1), welche einen Speicher (3) enthält, und mit Hilfe eines Positionierungsmoduls (9), wobei sich in dem Speicher (3) eine Datenbank (4) geographischer Bereiche und ihnen zugehörige geographische Koordinaten befinden, mit Hilfe welcher jeder geographische Bereich begrenzt ist, wobei für jeden geographischen Bereich in der Datenbank (4) mindestens eine Menge verbotener Kanäle der drahtlosen Kommunikation in gegebenem geographischen Bereich eingespeichert ist, wobei das Verfahren zur Auswahl der nutzbaren Kanäle der drahtlosen Kommunikation folgende Schritte enthält:

   - Bestimmung der geographischen Position des Fahrzeugs unter Anwendung des Positionierungsmoduls (9);
   - Auffinden des geographischen Bereichs, der die festgelegte geographische Position des Fahrzeugs enthält, in der Datenbank (4) mit Hilfe der Steuereinheit (1); und
   - Auswahl nutzbarer Kanäle der drahtlosen Kommunikation,
   wobei im Schritt der Auswahl der nutzbaren Kanäle der drahtlosen Kommunikation aus einem Verzeichnis der Kanäle der drahtlosen Kommunikation nutzbare Kanäle der drahtlosen Kommunikation ausgewählt werden in Abhängigkeit von mindestens einer der Mengen der verbotenen Kanäle der drahtlosen Kommunikation, welche für den geographischen Bereich bestimmt sind, der die festgelegte geographische Position enthält, wobei die gegebene mindestens eine von den Mengen der verbotenen Kanäle der drahtlosen Kommunikation, die für den geographischen Bereich bestimmt sind, welcher die festgelegte geographische Position enthält, keinen der ausgewählten nutzbaren Kanäle der drahtlosen Kommunikation enthält,
   wobei geographische Bereiche in Grenzbereiche (5) und Innenbereiche (6) aufgeteilt werden,
   wobei für einen jeweiligen Innenbereich (6) eine einzige Menge der verbotenen Kanäle der drahtlosen Nachrichtenübertragung gilt,
   wobei jeder Grenzbereich in eine erste Region mit einer ersten Menge der verbotenen Kanäle und eine zweite Region mit einer zweiten Menge der verbotenen Kanäle eingeteilt wird,
   wobei in jedem Grenzbereich beide Mengen der verbotenen Kanäle gelten.

2. Verfahren zur Auswahl verwendbarer Kanäle der drahtlosen Kommunikation des Kommunikationsmoduls des Fahrzeugs nach Anspruch 1, wobei jeder Innenbereich (6) in der Datenbank (4) nur ein einziges Mal, und jeder Grenzbereich (5) in der Datenbank (4) mindestens einmal gespeichert ist.

3. Verfahren zur Auswahl verwendbarer Kanäle der drahtlosen Kommunikation des Kommunikationsmoduls des Fahrzeugs nach einem der vorhergehenden Ansprüche, wobei im Verlauf der Auswahl Kanäle der drahtlosen Kommunikation aus einer der folgenden Mengen ausgewählt werden: Menge, welche Kanäle aus dem 2,4-GHz-Band enthält, Menge, welche Kanäle aus dem 5-GHz-Band enthält, Menge, welche Kanäle aus dem 2,4-GHz und 5-GHz-Band enthält, Menge, welche Kanäle aus dem beschränkten 5-GHz-Band enthält, und leere Menge.

4.  Verfahren zur Auswahl verwendbarer Kanäle der drahtlosen Kommunikation des Kommunikationsmoduls des Fahrzeugs nach Anspruch 2 oder 3, wobei geographische Bereiche in der Datenbank (4) durch Äquator und Null-Meridian in vier geographische Zonen (10) aufgeteilt sind, wobei jeder Grenzbereich (5) eine Größe von annähernd 1° geographischer Breite auf 1° geographischer Länge hat, und jeder Innenbereich (6) mindestens einen Bereich einschließt, dessen ungefähre Größe etwa 1° geographischer Breite auf 1° geographischer Länge ausmacht.

5.  Verfahren zur Auswahl verwendbarer Kanäle der drahtlosen Kommunikation des Kommunikationsmoduls des Fahrzeugs nach einem der vorhergehenden Ansprüche, wobei jeder geographische Bereich mittels höchstens zwei Punkten eindeutig definiert wird, wobei jeder Punkt durch Angabe einer geographischen Breite und einer geographischen Länge bestimmt ist.

6.  Verfahren zur Auswahl verwendbarer Kanäle der drahtlosen Kommunikation des Kommunikationsmoduls des Fahrzeugs nach einem der vorhergehenden Ansprüche, wobei die Bestimmung der Mengen der verbotenen Kanäle der drahtlosen Kommunikation für geographische Bereiche durch eine Unterteilung der Datenbank (4) in Sektionen (13) realisiert wird, wobei jeder geographische Bereich mindestens einer Sektion (13) zugeordnet ist, und Bestimmung der Menge verbotener Kanäle der drahtlosen Kommunikation für jede Sektion (13).

7.  Verfahren zur Auswahl verwendbarer Kanäle der drahtlosen Kommunikation des Kommunikationsmoduls des Fahrzeugs nach einem der Ansprüche 2 bis 6, wobei jeder Grenzbereich (5) in Unterbereiche (7) aufgeteilt ist, wobei jeder Unterbereich (7) mit einer Information verknüpft ist, welche für diesen Unterbereich (7) eine Gültigkeit einzelner Mengen verbotener Kanäle der drahtlosen Kommunikation bestimmt, welche für den gegebenen Grenzbereich (5) bestimmt sind, wobei im Schritt der Auswahl der verwendbaren Kanäle der drahtlosen Kommunikation jedem gefundenen Grenzbereich (5) ein Unterbereich (7) zugeordnet ist, der die festgelegte Position bestimmt, und ein Zustand der drahtlosen Kommunikation auf der Grundlage der Vereinigung der Mengen verbotener Kanäle der drahtlosen Kommunikation, welche in den festgestellten Unterbereichen (7) gültig sind, gewählt wird.

8.  Verfahren zur Auswahl verwendbarer Kanäle der drahtlosen Kommunikation des Kommunikationsmoduls des Fahrzeugs nach einem der vorhergehenden Ansprüche, wobei die Mengen der verbotenen Kanäle in der Datenbank (4) für einzelne geographische Bereiche mittels Codes von Staaten bestimmt sind und im Schritt der Auswahl der verwendbaren Kanäle der drahtlosen Kommunikation dem Code des Staates eine Menge der verbotenen Kanäle der drahtlosen Kommunikation zugeordnet wird.

9.  Fahrzeug, welches Steuereinheit (1), Speicher (3), Kommunikationsmodul des Fahrzeugs und Positionierungsmodul (9) enthält, wobei das Kommunikationsmodul des Fahrzeugs mittels der Steuereinheit (1) für Empfang und/oder Versenden eines Signals auf ausgewählten Kanälen der drahtlosen Kommunikation einstellbar ist, wobei gegebene Kanäle der drahtlosen Kommunikation des Kommunikationsmoduls des Fahrzeugs nach einem der vorhergehenden Ansprüche ausgewählt werden.

**Claims**

1.  Method for selecting the usable channels for wireless communication of a vehicle communication module from the list of channels of wireless communication, which are supported by the vehicle communication module as a function of a geographical position of the vehicle by means of a control unit (1), which includes a memory (3), and by means of a positioning module (9), wherein in the memory (3) there is a database (4) of geographical areas and geographical coordinates associated therewith, by means of which each geographical area is delimited, wherein for each geographical area at least one set of forbidden channels for wireless communication in a given geographical area is stored in the database (4), wherein the method for selecting the usable channels for wireless communication includes the following steps:

    - determining the geographical position of the vehicle using the positioning module (9);
    - locating the geographical area which contains the specified geographical position of the vehicle in the database (4) by means of the control unit (1); and

- selecting usable channels for wireless communication,

wherein in the step of selecting the usable channels for wireless communication, usable channels for wireless communication are selected from a list of channels for wireless communication as a function of at least one of the sets of prohibited channels for wireless communication, which are intended for the geographical area including the specified geographical position, wherein the given at least one of the sets of prohibited channels for wireless communication, which is intended for the geographical area including the specified geographical position does not contain any of the selected usable channels for wireless communication,

wherein geographical areas are divided into border areas (5) and interior areas (6),

wherein a single set of prohibited channelsof wireless message transmission is valid for a respective interior area (6),

wherein each border area isdivided into a first region having a first set of prohibited channels and a second region having a second set of prohibited channels,

wherein both sets of prohibited channels are valid in each border area.

2. Method for selecting usable channels for wireless communication of the vehicle communication module according to claim 1, wherein each interior area (6) is stored in the database (4) only once, and each border area (5) is stored in the database (4) at least once.

3. Method for selecting usable channels for wireless communication of the vehicle communication module according to any one of the preceding claims, wherein in the course of the selection channels for wireless communication are selected from one of the following sets: a set containing channels from the 2.4 GHz band, a set containing channels from the 5 GHz band, a set containing channels from the 2.4 GHz and 5 GHz band, a set containing channels from the restricted 5 GHz band and an empty set.

4. Method for selecting usable channels for wireless communication of the vehicle communication module according to claim 2 or 3, wherein geographical areas in the database (4) are divided by equator and prime meridian into four geographical zones (10), wherein each border area (5) has a size of approximately 1° latitude by 1° longitude, and each interior area (6) includes at least one area, whose approximate size is approximately 1° latitude by 1° longitude.

5. Method for selecting usable channels for wireless communication of the vehicle communication module according to any one of the preceding claims, wherein each geographical area is uniquely defined by meansof at most two points, wherein each point isdefined by indicating a latitude and a longitude.

6. Method for selecting usable channels for wireless communication of the vehicle communication module according to any one of the preceding claims, wherein the determination of the sets of prohibited channels for wireless communication for geographical areas is performed by subdividing the database (4) into sections (13), wherein each geographical area is assigned to at least one section (13), and determining the set of prohibited channels for wireless communication for each section (13).

7. Method for selecting usable channels for wireless communication of the vehicle communication module according to any one of claims2 to 6, wherein each border area (5) is divided into subareas (7), wherein each subarea (7) is associated with a piece of information which determines for this subarea (7) the validity of individual sets of prohibited channels for wireless communication, which are intended for the given border area (5), wherein in the step of selecting usable channels for wireless communication each detected border area (5) is assigned a subarea (7) which determines the specified position, and a state for wireless communication is selected on the basis of the combination of the sets of prohibited channels for wireless communication which are valid in the specified subareas (7).

8. Method for selecting usable channels for wireless communication of the vehicle communication module according to any one of the preceding claims, wherein the setsof prohibited channels in the database (4) for individual geographical areas are determined by means of codes of countries and in the step of selecting the usable channels for wireless communication a set of prohibited channels for wireless communication are assigned to the code of the country.

9. Vehicle, comprising a control unit (1), memory (3), vehicle communication module and positioning module (9), wherein the vehicle communication module is adjustable by means of the control unit (1) for receiving and/or transmitting a signal on selected channels for wireless communication, wherein given channels for wireless communication of the vehicle communication module are selected according to any one of the preceding claims.

**Revendications**

1. Procédé de sélection de canaux utilisables d'une communication sans fil d'un module de communication d'un véhicule à partir du répertoire de canaux de la communication sans fil, qui sont pris en charge par le module de communication du véhicule en fonction d'une position géographique du véhicule à l'aide d'un dispositif de commande (1), qui contient une mémoire (3), et à l'aide d'un module de positionnement (9), dans lequel se trouvent dans la mémoire (3) une base de données (4) de zones géographiques et des coordonnées géographiques qui leur sont associées, à l'aide desquelles chaque zone géographique est délimitée, dans lequel pour chaque zone géographique dans la base de données (4) est enregistrée au moins un ensemble de canaux interdits de la communication sans fil dans une zone géographique donnée, dans lequel le procédé de sélection des canaux utilisables de la communication sans fil comprend les étapes suivantes :

   - détermination de la position géographique du véhicule à l'aide du module de positionnement (9) ;
   - localisation de la zone géographique, qui contient la position géographique fixée du véhicule, dans la base de données (4) à l'aide du dispositif de commande (1) ; et
   - sélection de canaux utilisables de la communication sans fil,

      dans lequel, à l'étape de sélection des canaux utilisables de la communication sans fil à partir d'un répertoire des canaux de la communication sans fil, des canaux utilisables de la communication sans fit sont sélectionnés en fonction d'au moins l'un des ensembles des canaux interdits de la communication sans fil qui sont déterminées pour la zone géographique qui contient la position géographique déterminée, dans lequel la au moins un des ensembles données des canaux interdits de la communication sans fil, qui sont déterminées pour la zone géographique qui contient la position géographique fixée, ne contient aucun des canaux utilisables sélectionnés de la communication sans fil,
      dans lequel des zones géographiques sont divisées en zones frontalières (5) et zones intérieures (6).
      dans lequel un seul ensemble de canaux interdits du transfert d'informations sans fil s'applique à une zone intérieure (6) respective,
      dans lequel chaque zone frontalière est divisée en une première région avec une premier ensemble de canaux interdits et en une seconde région avec une second ensemble de canaux interdits,
      dans lequel les deux ensembles de canaux interdits s'appliquent à chaque zone frontalière.

2. Procédé de sélection de canaux utilisables de la communication sans fil du module de communication du véhicule selon la revendication 1, dans lequel chaque zone intérieure (6) n'est enregistrée qu'une seule fois dans la base de données (4), et chaque zone frontalière (5) est enregistrée au moins une fois dans la base de données (4).

3. Procédé de sélection de canaux utilisables de la communication sans fil du module de communication du véhicule selon l'une quelconque des revendications précédentes, dans lequel, au cours de la sélection, des canaux de la communication sans fil sont sélectionnés à partir d'une des ensembles suivants : ensemble qui contient des canaux de la bande de 2,4 GHz, ensemble qui contient des canaux de la bande de 5 GHz, ensemble qui contient des canaux de la bande de 2,4 GHz et de la bande de 5 GHz, ensemble qui contient des canaux de la bande de 5 GHz restreinte et ensemble vide.

4. Procédé de sélection de canaux utilisables de la communication sans fil du module de communication du véhicule selon la revendication 2 ou 3, dans lequel des zones géographiques de la base de données (4) sont divisées par l'équateur et le méridien zéro en quatre zones géographiques (10), dans lequel chaque zone frontalière (5) présente une taille d'environ 1° de latitude sur 1° de longitude, et chaque zone intérieure (6) inclut au moins une zone dont la taille approximative est d'environ 1° de latitude sur 1° de longitude.

5. Procédé de sélection de canaux utilisables de la communication sans fil du module de communication du véhicule selon l'une quelconque des revendications précédentes, dans lequel chaque zone géographique est définie clairement au moyen de maximum deux points, dans lequel chaque point est déterminé en indiquant une latitude et une longitude.

6. Procédé de sélection de canaux utilisables de la communication sans fil du module de communication du véhicule selon l'une quelconque des revendications précédentes, dans lequel la détermination des ensembles de canaux interdits de la communication sans fil pour des zones géographiques est réalisée par une division de la base de données (4) en sections (13), dans lequel chaque zone géographique est associée à au moins une section (13), et de détermination de l'ensemble de canaux interdits de la communication sans fil pour chaque section (13).

7. Procédé de sélection de canaux utilisables de la communication sans fil du module de communication du véhicule selon l'une quelconque des revendications 2 à 6, dans lequel chaque zone frontalière (5) est divisée en sous-zones (7), dans lequel chaque sous-zone (7) est liée à une information qui détermine pour ladite sous-zone (7) une validité d'ensembles individuels de canaux interdits de la communication sans fil qui sont déterminées pour la zone frontalière (5) donnée, dans lequel, à l'étape de sélection des canaux utilisables de la communication sans fil, chaque zone frontalière (5) trouvée est associée à une sous-zone (7) qui détermine la position fixe, et un état de la communication sans fil est sélectionné sur la base de la combinaison des ensembles de canaux interdits de la communication sans fil qui sont valides dans les sous-zones (7) déterminées.

8. Procédé de sélection de canaux utilisables de la communication sans fil du module de communication du véhicule selon l'une quelconque des revendications précédentes, dans lequel les ensembles de canaux interdits dans la base de données (4) sont déterminés pour des zones géographiques individuelles au moyen de codes de pays et à l'étape de sélection de canaux utilisables de la communication sans fil, un ensemble de canaux interdits de la communication sans fil est associé au code du pays.

9. Véhicule qui contient un dispositif de commande (1), une mémoire (3), un module de communication du véhicule et un module de positionnement (9), dans lequel le module de communication du véhicule peut être réglé au moyen du dispositif de commande (1) pour la réception et/ou l'émission d'un signal sur des canaux sélectionnés de la communication sans fil, dans lequel des canaux donnés de la communication sans fil du module de communication du véhicule sont sélectionnés selon l'une quelconque des revendications précédentes.

Fig. 1

5

7

8

7

Fig. 2

| 1 | 1 | 1 | 1 | 1 | 1 | 1 | 1 |
|---|---|---|---|---|---|---|---|
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |
| 1 | 1 | 1 | 1 | 0 | 0 | 0 | 0 |
| 0 | 0 | 0 | 0 | 0 | 0 | 0 | 0 |

Fig. 3

| 0 | 0 | 0 | 0 | 0 | 0 | 0 | 0 |
|---|---|---|---|---|---|---|---|
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |

Fig. 4

Karte mit den für einzelne Länder festgelegten Beschränkungen der drahtlosen Nachrichtenübertragung

↓

Aufteilen der Karte auf geographische Gebiete

↓

Auteilen der geographische gebiete auf Innen- und Grenzgebiete

↓

Vereinigung einiger Innengebiete

↓

Aufteilen der Grenzgebiete auf Untergebiete

↓

Bestimmung der Gültigkeit einzelner Beschränkungen im jeden Untergebiet

↓

Einteilung der geographischen Gebiete in Zonen

↓

Einteilung der geographischen Gebiete in jeder Zone in Teilbereich mit Innengebieten und Teilbereich mit Grenzgebieten

↓

Einteilung der Grenzgebiete in jedem Teilbereich in Segmente nach Beschränkungen

↓

Speicherung der eingeteilten geographischen Gebiete in der Datenbank

Fig. 5

Fig. 6

```
                    ┌─────────────────┐
                    │   Positions-    │
                    │   bestimmung    │
                    └─────────────────┘
                             │
                             ▼
    ┌──────────────────────────────────────────────┐
    │  Sprung in die relevante Zone der Datenbank    │
    │  entpsrechend dem Vorzeichen der Koordinaten   │
    │        der ermittelten Position                │
    └──────────────────────────────────────────────┘
                             │
                             ▼
    ┌──────────────────────────────────────────────┐
    │  Auffinden des geographischen Bereiches mit    │
    │   ermittelten Position in der jeweiligen Zone  │
    └──────────────────────────────────────────────┘
                             │
                             ▼
```

Ist das gefundene geographische Gebiet ein Innengebiet?

nein

ja

Wahl eines die Beschränkungen im betreffenden Innengebiet erfüllenden Zustandes der drahtlosen Nachrichtenübertragung

Auffinden aller Treffer für das jeweilige Grenzgebiet in der betreffenden Zone

Auffinden des Untergebiets des betreffenden Grenzgebiets mit der ermittelten Position

Wahl eines alle Beschränkungen im betreffenden Innengebiet erfüllenden Zustandes der drahtlosen Nachrichtenübertragung

Einstellung der drahtlosen Nachrichtenübertragung in den gewählten Zustand der drahtlosen Nachrichtenbübertragung

Fig. 7

```
┌─────────────────────────────────────┐
│        Welt- oder Weltteilkarte       │
└─────────────────────────────────────┘
                    │
                    ▼
┌─────────────────────────────────────┐
│         Aufteilung der Karte auf      │
│        geographische Gebiete          │
└─────────────────────────────────────┘
                    │
                    ▼
┌─────────────────────────────────────┐
│  Aufteilung der geographischen Gebiete auf │
│       Innen- und Grenzgebiete         │
└─────────────────────────────────────┘
                    │
                    ▼
┌─────────────────────────────────────┐
│      Vereinigung einiger Innengebiete  │
└─────────────────────────────────────┘
                    │
                    ▼
┌─────────────────────────────────────┐
│  Aufteilung der Grenzgebiete auf Untergebiete │
└─────────────────────────────────────┘
                    │
                    ▼
┌─────────────────────────────────────┐
│  Einteilung der geographischen Gebiete │
│               in Zonen                │
└─────────────────────────────────────┘
                    │
                    ▼
┌─────────────────────────────────────┐
│  Bildung von Segmenten in jeder Zone, wobei jedes │
│  Segment einem Land entspricht, und Bestimmung │
│  des jeweiligen Ländercodes für jedes Segment │
└─────────────────────────────────────┘
                    │
                    ▼
┌─────────────────────────────────────┐
│  Einteilung jedes geographischen Gebietes in alle │
│  Segmente, welche den im betreffenden geogra- │
│  phischen Gebiet eingreifenden Ländern entsprechen │
└─────────────────────────────────────┘
                    │
                    ▼
┌─────────────────────────────────────┐
│     Zuordnung jedes Untergebietes      │
│          gerade einem Land            │
└─────────────────────────────────────┘
                    │
                    ▼
┌─────────────────────────────────────┐
│   Speicherung der geographischen       │
│     Gebiete in der Datenbank          │
└─────────────────────────────────────┘
```

Fig. 8

Positionsbestimmung und Sprung in die relevante
Zone der Datenbank

Auffinden des geographischen Gebietes mit
ermittelten Position in der betreffenden Zone

Ist das gefundene
geographisches Gebiet
ein Innengebiet?

ja

nein

Fällt die ermittelte
Position in Untergebiet,
in dem die Beschränkung für
den gefundenen Treffer des
betreffenden Grenzgebietes gilt?

ja

Absenden des
dem betreffenden Gebiet
zugeteilten
Ländercodes an
das Kommunikationsmodul

nein

Auffinden weiterer
Treffer für betreffendes
Grenzgebiet in der
jeweiligen Zone

Einstellung des
Kommunikationsmoduls
entsprechend dem
jeweiligen Ländercode

Fig. 9

Fig. 10

| Frequenzband der drahtlosen Nachrichtenübertragung | | Binäres Code |
|---|---|---|
| 2,4 GHz | 5 GHz | |
| aus | aus | 111 |
| aus | ein | 100 |
| aus | beschränkt | 101 |
| ein | aus | 011 |
| ein | ein | 000 |
| ein | beschränkt | 001 |

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 107517478 A
- US 20140226572 A1
- JP 2004274723 A
- WO 2015154461 A1
- US 2015334646 A1